# EUROPEAN PATENT APPLICATION

(11) **EP 4 564 959 A1**
(43) Date of publication of application: **04.06.2025**
(21) Application number: 22957817.4
(22) Date of filing: 09.09.2022
(51) Int. Cl.: H04W 72/04

(54) **SENSING MEASUREMENT METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: GAO, Ning, Dongguan, Guangdong 523860 (CN); LUO, Chaoming, Dongguan, Guangdong 523860 (CN); ZHOU, Pei, Dongguan, Guangdong 523860 (CN)
(74) Representative: RGTH
(86) International application number: PCT/CN2022/118271
(87) International publication number: WO 2024/050849

(57) **Abstract**

The present application discloses sensing measurement methods, apparatuses, devices and a storage medium, and the present application belongs to the field of sensing measurement. The method includes: during a sensing measurement process, transmitting, by a sensing initiator, a frame carrying a first field to a sensing responder. Since the first field is a specific field of sequential coordinated monostatic or parallel coordinated monostatic, and/or the first field has a specific meaning in the sequential coordinated monostatic or the parallel coordinated monostatic, at least one of three specific problems corresponding to information content carried in the first field can be solved according to a specific type of the first field, for example, it is possible to distinguish a sensing type of the coordinated monostatic, and/or it is possible to distinguish a polling status of coordinated monostatic sensing measurement report, and/or it is possible to limit the maximum length of the monostatic PPDU. This makes it easier for the sensing responder to have a more comprehensive understanding and analysis of a process of the coordinated monostatic sensing measurement.

## Description

### TECHNICAL FIELD

The present application relates to the field of sensing measurement, and in particular, to sensing measurement methods, apparatuses, devices and a storage medium.

### BACKGROUND

Wireless local area network (WLAN) sensing refers to a technology for sensing people or objects in an environment by measuring changes in scattering and/or reflection of WLAN signals by the people or objects.

There are various sensing types. One sensing type is a coordinated monostatic sensing. In the coordinated monostatic sensing, the number of sensing measurement devices participating in sensing is greater than one, and each sensing responding device senses the environment through self-transmitting sensing physical layer protocol data unit (PPDU) and self-receiving echo signals. There is one sensing initiating device (sensing initiator) that controls all other sensing responding devices to achieve collaboration.

### SUMMARY

The present application provides sensing measurement methods, apparatuses, devices and a storage medium. The technical solution is as follows.

In accordance with an aspect of the present application, a sensing measurement method is provided, which is applied to a sensing measurement device. The method includes:
transmitting a frame carrying a first field;
where the first field is a specific field of sequential coordinated monostatic or parallel coordinated monostatic, and/or the first field has a specific meaning in the sequential coordinated monostatic or the parallel coordinated monostatic.

In accordance with another aspect of the present application, a sensing measurement method is provided, which is applied to a sensing measurement device. The method includes:
receiving a frame carrying a first field;
where the first field is a specific field of sequential coordinated monostatic or parallel coordinated monostatic, and/or the first field has a specific meaning in the sequential coordinated monostatic or the parallel coordinated monostatic.

In accordance with yet another aspect of the present application, a sensing measurement apparatus is provided, which is applied to a sensing measurement device. The apparatus includes:
a transmitting module, configured to transmit a frame carrying a first field;
where the first field is a specific field of sequential coordinated monostatic or parallel coordinated monostatic, and/or the first field has a specific meaning in the sequential coordinated monostatic or the parallel coordinated monostatic.

In accordance with still another aspect of the present application, a sensing measurement apparatus is provided, which is applied to a sensing measurement device. The apparatus includes:
a receiving module, configured to receive a frame carrying a first field;
where the first field is a specific field of sequential coordinated monostatic or parallel coordinated monostatic, and/or the first field has a specific meaning in the sequential coordinated monostatic or the parallel coordinated monostatic.

In accordance with still yet another aspect of the present application, a sensing initiating device is provided. The device includes:
a processor;
a transceiver connected to the processor; and
a memory for storing executable instructions of the processor;
where the processor is configured to load the executable instructions, to enable the sensing initiating device to implement the sensing measurement method as described in the above aspects.

In accordance with still yet another aspect of the present application, a sensing responding device is provided. The device includes:
a processor;
a transceiver connected to the processor; and
a memory for storing executable instructions of the processor;
where the processor is configured to load the executable instructions, to enable the sensing responding device to implement the sensing measurement method as described in the above aspects.

In accordance with still yet another aspect of the embodiments of the present application, a computer-readable storage medium is provided. The computer-readable storage medium has stored therein a computer program, and the computer program is used to be executed by a sensing measurement device, to implement the sensing measurement method described in the above aspects.

In accordance with still yet another aspect of the embodiments of the present application, a chip is provided, which includes a programmable logic circuit and/or program instructions. A sensing measurement device equipped with the chip, when operating, is used to implement the sensing measurement method described in the above aspects.

In accordance with still yet another aspect of the embodiments of the present application, a computer program product or a computer program is provided. The computer program product or the computer program includes computer instructions, the computer instructions are stored in a computer-readable storage medium, and a sensing measurement device reads the computer instructions from the computer-readable storage medium and executes the computer instructions, to implement the sensing measurement method described in the above aspects.

The technical solution provided by the embodiments of the present application includes at least the following beneficial effects.

A sensing initiator transmits a frame carrying a first field to a sensing responder. Since the first field is a specific field of sequential coordinated monostatic or parallel coordinated monostatic, and/or the first field has a specific meaning in the sequential coordinated monostatic or the parallel coordinated monostatic, a specific problem corresponding to information content carried in the first field can be solved according to a specific type of the first field, for example, it is possible to distinguish a sensing type of the coordinated monostatic, and/or it is possible to distinguish a polling status of coordinated monostatic sensing measurement report, and/or it is possible to limit the maximum length of the monostatic PPDU. After receiving the frame transmitted by the sensing initiator, the sensing responder reads the field in the frame, which not only improves the sensing accuracy of the sensing responder, but also facilitates the sensing responder to have a more comprehensive understanding and analysis of a process of the coordinated monostatic sensing measurement.

### BRIEF DESCRIPTION OF THE DRAWINGS

In order to more clearly illustrate technical solutions in the embodiments of the present application, drawings required for use in the description of the embodiments will be briefly introduced below, and it will be obvious that the drawings described below are only some of the embodiments of the present application. For ordinary skilled in the art, other drawings can be obtained based on these drawings without creative effort.
FIG. 1 is a block diagram of a sensing measurement system provided by an exemplary embodiment of the present application;
FIG. 2 is a schematic diagram of millimeter-wave sensing types provided by an exemplary embodiment of the present application;
FIG. 3 is a schematic diagram of a process of millimeter-wave sensing provided by an exemplary embodiment of the present application;
FIG. 4 is a schematic diagram of a sequential mode instance of millimeter-wave coordinated monostatic sensing measurement provided by an exemplary embodiment of the present application;
FIG. 5 is a schematic diagram of a parallel mode instance of millimeter-wave coordinated monostatic sensing measurement provided by an exemplary embodiment of the present application;
FIG. 6 is a schematic diagram of a frame format of a DMG sensing measurement setup element provided by an exemplary embodiment of the present application;
FIG. 7 is a schematic diagram of a format of a beamforming frame provided by an exemplary embodiment of the present application;
FIG. 8 is a schematic diagram of a format of a sensing request frame provided by an exemplary embodiment of the present application;
FIG. 9 is a schematic diagram of a format of a sensing response frame provided by an exemplary embodiment of the present application;
FIG. 10 is a schematic diagram of a format of a sensing poll frame provided by an exemplary embodiment of the present application;
FIG. 11 is a flowchart of a sensing measurement method provided by an exemplary embodiment of the present application;
FIG. 12 is a flowchart of a sensing measurement method provided by an exemplary embodiment of the present application;
FIG. 13 is a schematic diagram of a format of a DMG sensing measurement setup frame provided by an exemplary embodiment of the present application;
FIG. 14 is a schematic diagram of a format of a DMG sensing request frame provided by an exemplary embodiment of the present application;
FIG. 15 is a schematic diagram of a format of a DMG sensing request frame provided by an exemplary embodiment of the present application;
FIG. 16 is a schematic diagram of a format of a DMG sensing request frame provided by an exemplary embodiment of the present application;
FIG. 17 is a schematic diagram of a format of a DMG sensing measurement setup frame provided by an exemplary embodiment of the present application;
FIG. 18 is a schematic diagram of a format of a DMG sensing measurement setup frame provided by an exemplary embodiment of the present application;
FIG. 19 is a schematic diagram of a format of a frame of an optional subelement in a DMG sensing measurement setup frame provided by an exemplary embodiment of the present application;
FIG. 20 is a schematic diagram of a format of a DMG sensing request frame provided by an exemplary embodiment of the present application;
FIG. 21 is a flowchart of a parallel mode of coordinated monostatic sensing measurement provided by an exemplary embodiment of the present application;
FIG. 22 is a schematic diagram of a frame format of an optional subelement in a DMG sensing measurement setup frame provided by an exemplary embodiment of the present application;
FIG. 23 is a schematic diagram of a frame format of an optional subelement in a DMG sensing measurement setup frame provided by an exemplary embodiment of the present application;
FIG. 24 is a schematic diagram of a frame format of an optional subelement in a DMG sensing measurement setup frame provided by an exemplary embodiment of the present application;
FIG. 25 is a schematic diagram of a frame format of a sensing measurement scheduling subelement in a DMG sensing measurement setup frame provided by an exemplary embodiment of the present application;
FIG. 26 is a block diagram of a sensing measurement device provided by an exemplary embodiment of the present application;
FIG. 27 is a block diagram of a sensing measurement device provided by an exemplary embodiment of the present application; and
FIG. 28 is a schematic diagram of a structure of a sensing measurement device provided by an exemplary embodiment of the present application.

### DETAILED DESCRIPTION

In order to make the purposes, technical solutions and advantages of the present application clearer, implementations of the present application will be described in further detail below in conjunction with the drawings. Exemplary embodiments will be described herein in detail, examples of which are represented in the drawings. When the following description relates to the drawings, unless otherwise indicated, the same numerals in different drawings represent the same or similar elements. The implementations described in the following exemplary embodiments do not represent all implementations consistent with the present application. Rather, they are merely examples of apparatuses and methods consistent with some aspects of the present application as detailed in the appended claims.

Terms used in the present disclosure are for the purpose of describing particular embodiments only and are not intended to limit the present disclosure. As used in the present disclosure and the appended claims, the singular forms "a", "an" and "the" are intended to encompass the plural forms as well, unless the context clearly indicates otherwise. It should also be understood that the term "and/or" used herein refers to and encompasses any or all of the possible combinations of one or more of the associated listed items.

It should be understood that although the terms "first", "second", "third" etc., may be employed in the present disclosure to describe various types of information, such information should not be limited to these terms. These terms are used only to distinguish pieces of information of the same type from one another. For example, without departing from the scope of the present disclosure, first information may also be referred to as second information, and similarly, second information may also be referred to as first information. The word "if" as used herein may be interpreted as "in a case where" or "at/when" or "in response to determining", depending on the context.

First, some terms involved in the embodiments of the present application are described as follows:
WLAN sensing: sensing people or objects in an environment through measuring changes in scattering and/or reflection of WLAN signals by the people or objects. That is, WLAN sensing measures and senses the surrounding environment through wireless signals, thereby accomplishing various functions such as detection of whether people are intruding/moving/falling indoors, posture recognition, and establishment of spatial three-dimensional images;
Association identifier (AID): used to identify a terminal that has established an association with an access point.

WLAN devices participating in WLAN sensing may include the following roles:
Sensing initiator: also known as a sensing session initiator, a sensing initiating device, or an initiator; the sensing initiator is a device that initiates sensing measurement and intends to be informed of a sensing result;
Sensing responder: also known as a sensing session responder, a sensing responding device, or a responder; the sensing responder is a device that participates in the sensing measurement and is not a sensing initiating device;
Sensing signal transmitter (Sensing transmitter): also known as a sensing signal transmitting device, a sensing transmitter, a sensing transmitting device, or a transmitter; the sensing signal transmitter is a device that transmits a sensing physical layer protocol data unit (PPDU); and
Sensing signal receiver (Sensing receiver): also known as a sensing signal receiving device, a sensing receiver, a sensing receiving device, or a receiver; the sensing signal receiver is a device that receives an echo signal, where the echo signal is obtained through scattering and/or reflecting a sensing PPDU transmitted by the sensing signal transmitter by people or objects.

A WLAN terminal may have one or more roles in a sensing measurement. For example, a sensing initiator may be only a sensing initiator, or may be a sensing signal transmitter, or may be a sensing signal receiver, or may be both the sensing signal transmitter and the sensing signal receiver. The above devices can be collectively referred to as sensing measurement devices.

Next, the relevant technical background involved in the embodiments of the present application is described.

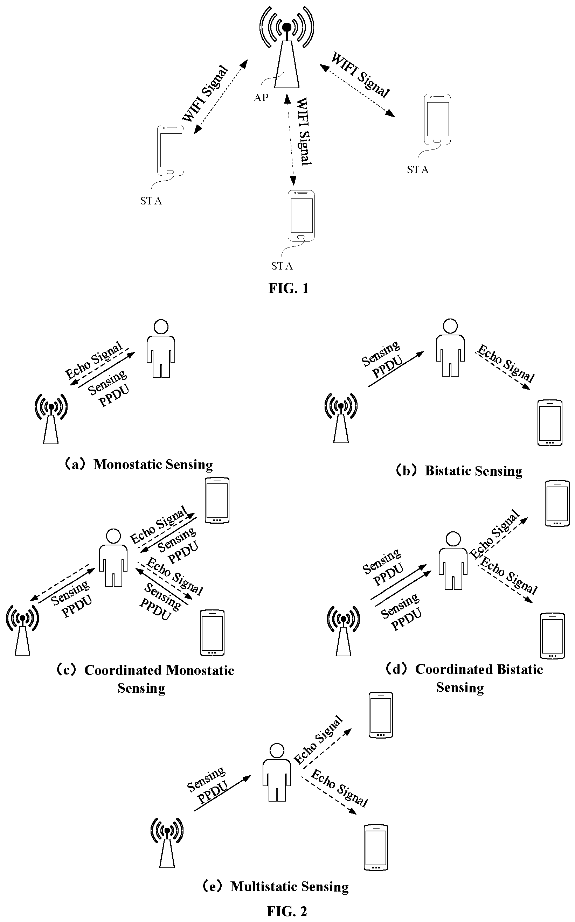

FIG. 1 is a block diagram of a sensing measurement system provided by an exemplary embodiment of the present application. The sensing measurement system includes a terminal and another terminal, or a terminal and a network device, or an access point (AP) and a station (STA), which are not limited in the present application. In the present application, the sensing measurement system including an AP and a STA is taken as an example for description.

In some scenarios, the AP may be referred to as an AP STA That is, in a sense, the AP is also a STA. In some scenarios, the STA is also called a non-AP STA.

In some embodiments, STAs may include AP STAs and non-AP STAs.

Communication in a communication system may be communication between an AP and a non-AP STA, or communication between a non-AP STA and a non-AP STA, or communication between a STA and a peer STA, where the peer STA may refer to a device that performs peer communicate with a STA, for example, the peer STA may be an AP or a non-AP STA.

The AP is equivalent to a bridge connecting a wired network and a wireless network, with the main function of connecting individual wireless network clients together and then accessing the wireless networks to the Ethernet. An AP device may be a terminal device (e.g., a mobile phone) or a network device (e.g., a router) with a wireless-fidelity (Wi-Fi) chip.

It should be understood that the role of the STA in the communication system is not fixed. For example, in some scenarios, in a case where a mobile phone is connected to the router, the mobile phone is a non-AP STA; while in a case where the mobile phone serves as a hotspot for other mobile phones, the mobile phone plays a role of an AP.

The AP and the non-AP STA may be devices used in an internet of vehicles, internet of things (IoT) nodes and sensors in an IoT), smart cameras, smart remote controls, smart water meters and smart electricity meters in smart homes, or sensors in smart cities.

In some embodiments, the non-AP STA may support but is not limited to an 802.11bf standard. The non-AP STA may also support various current and future 802.11 family WLAN standards, such as 802.11ax, 802.11ac, 802.11n, 802.11g, 802.11b, and 802.11a.

In some embodiments, the AP may be a device that supports the 802.11bf standard. The AP may also be a device that supports various current and future 802.11 family WLAN standards, such as 802.11ax, 802.11ac, 802.11n, 802.11g, 802.11b, and 802.11a.

In the embodiments of the present application, the STA may be a mobile phone, a pad, a computer, a virtual reality (VR) device, an augmented reality (AR) device, a wireless device in industrial control, a set-top box, a wireless device in self-driving, a vehicle communication device, a wireless device in remote medical care, a wireless device in smart grid, a wireless device in transportation safety, a wireless device in smart city, a wireless device in smart home, a wireless communication chip/ASIC/SOC/, or the like that supports WLAN/Wi-Fi technology.

WLAN technology may support frequency bands including but not limited to: low frequency bands (2.4 GHz, 5 GHz, and 6 GHz) and high frequency bands (60 GHz).

There are one or more links between a station and an access point.

In some embodiments, the station and access point support multi-band communication, for example, communicating simultaneously on the 2.4 GHz, 5 GHz, 6 GHz, and 60 GHz bands, or communicating simultaneously on different channels of a same band (or different bands), to improve communication throughput and/or reliability between devices. This type of device is usually called a multi-band device, or is called a multi-link device (MLD), or is called a multi-link entity or a multi-band entity sometimes. The multi-link device may be an access point device or a station device. If the multi-link device is the access point device, the multi-link device includes one or more APs; and if the multi-link device is the station device, the multi-link device includes one or more non-AP STAs.

A multi-link device including one or more APs is called an AP, and a multi-link device including one or more non-AP STAs is called a Non-AP. In the embodiments of the present application, the Non-AP may be called the STA.

In the embodiments of the present application, the AP may include multiple APs, the Non-AP may include multiple STAs, in which multiple links may be formed between the APs in the AP and the STAs in the Non-AP, and data communication may be performed between an AP in the AP and a corresponding STA in the Non-AP through a corresponding link.

The AP is a device deployed in a wireless LAN to provide wireless communication functions for STAs. The station may include: a user equipment (UE), an access terminal, a user unit, a user station, a mobile station, a mobile console, a remote station, a remote terminal, a mobile device, a wireless communication device, a user agent, or a user equipment. Optionally, the station may also be a cellular phone, a cordless phone, a session initiation protocol (SIP) phone, a wireless local loop (WLL) station, a personal digital assistant (PDA), a handheld device or computing device with wireless communication functions, or other processing devices, vehicle device or wearable device connected to a wireless modem, but the embodiments of the present application are not limited to these.

In the embodiments of the present application, both the station and the access point support IEEE 802.11 standard, but are not limited to the IEEE 802.11 standard, and may also support other standards related to sensing measurement, such as IEEE 802.11 bf D0.1 standard.

In a WLAN sensing scenario, WLAN terminals participating in the sensing include: a sensing initiator and sensing responders. Furthermore, the sensing responders may be divided into a sensing transmitter and a sensing receiver.

The sensing measurement may be applied to a cellular network communication system, a wireless local area network (WLAN) system, or a wireless fidelity (Wi-Fi) system, which is not limited by the present application. In the present application, the sensing measurement applied in the WLAN system or the Wi-Fi system is taken as an example for schematic illustration.

Optionally, the sensing measurement in the embodiments of the present application is implemented based on millimeter-wave. The following is a description of millimeter-wave sensing types

FIG. 2 is a schematic diagram of millimeter-wave sensing types provided by an exemplary embodiment of the present application. As shown in FIG. 2, the (a) in FIG. 2 shows monostatic sensing, where there is only one device participating in the sensing. The device senses an environment by self-transmitting (transmitting by itself) sensing PPDUs and self-receiving (receiving by itself) echo signals, with a working manner similar to that of a traditional radar. Here, when transmitting a sensing PPDU, the device with self-transmitting and self-receiving will set a transmitter address and a receiver address of the sensing PPDU to its own address. The sensing PPDU transmitted by the device will form an echo signal after being scattered and/or reflected by the environment, and then the device may receive the echo signal through its own address and sense the environment by analyzing the echo signal. The (b) in FIG. 2 shows bistatic sensing, where there are two devices participating in the sensing, and one of the two devices transmits sensing PPDUs and the other device receives echo signals to sense the environment. The (c) in FIG. 2 shows coordinated monostatic sensing, where the number of devices participating in the sensing is greater than 1, each device senses the environment by self-transmitting sensing PPDUs and self-receiving echo signals, and there is one sensing initiator that controls all other devices to achieve collaboration. The (d) in FIG. 2 shows coordinated bistatic sensing, where there are more than two devices participating in the sensing, that is, there are at least two pairs of bistatic sensing devices, each transmitting device (sensing transmitter) transmits a sensing PPDU, and a receiving device (a sensing receiver) in a same group as the transmitting device receives a corresponding echo signal, so as to realize the coordinated sensing. The (e) of FIG. 2 shows multistatic sensing, where there are more than two devices participating in the sensing, one transmitting device transmits sensing PPDUs, and multiple receiving devices simultaneously receive echo signals and simultaneously complete environment sensing.

The following is a description of the millimeter-wave sensing process.

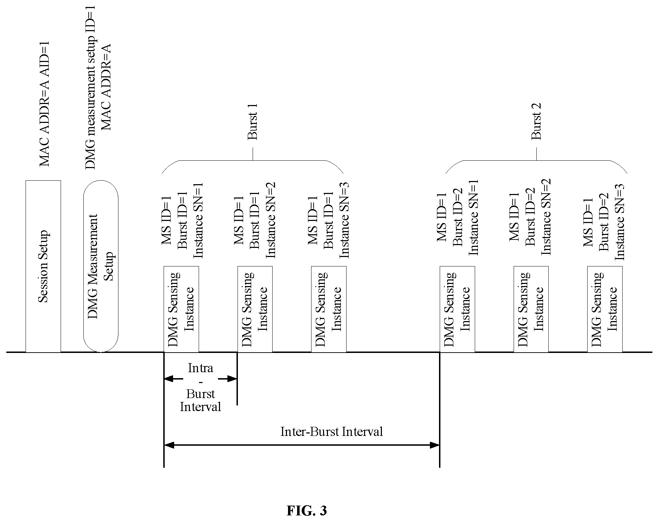

FIG. 3 is a schematic diagram of a process of millimeter-wave sensing provided by an exemplary embodiment of the present application. As shown in FIG. 3, the process is a general process of the millimeter-wave sensing, which includes, from left to right, a session setup phase, a millimeter-wave sensing measurement setup (directional multi-gigabit (DMG) measurement setup) phase, and a sensing measurement phase. Here, the sensing measurement phase consists of multiple sensing measurement bursts, and each burst consists of multiple sensing measurement instances (DMG sensing instances). A time interval between bursts is an inter-burst interval, and a time interval between adjacent sensing measurement instances in a burst is an intra-burst interval. In FIG. 3, MAC ADDR means a medium access control (MAC) address, AID means an association identifier, DMG measurement setup ID means a millimeter-wave sensing measurement setup identifier, MS ID means a measurement setup (MS) identifier, Burst ID means a burst identifier, and Instance SN (sequence number) means an identifier of the sensing measurement instance, which may be referred to a sensing instance SN. The "burst" in the above description may also be referred to as "outbreak".

The following is a description of a millimeter-wave coordinated monostatic sensing measurement instance.

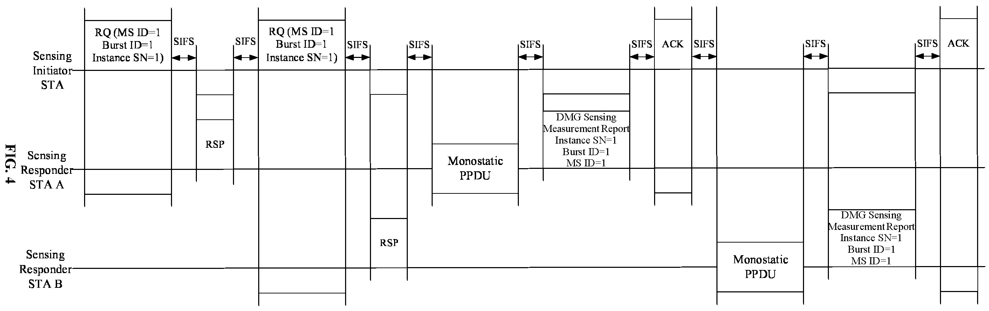

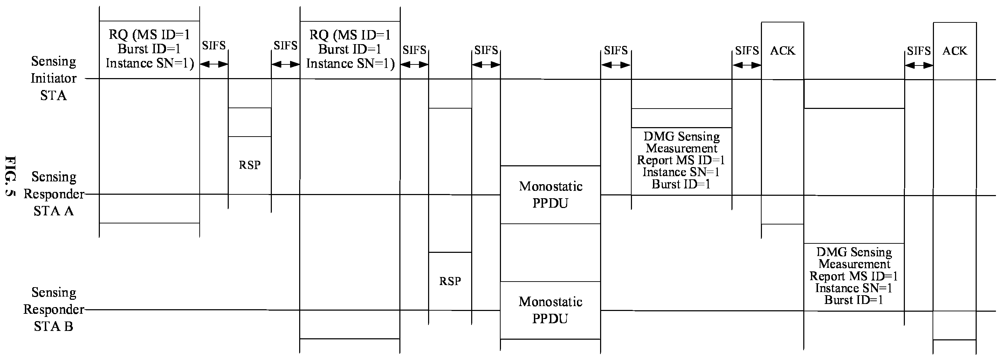

There are two modes of millimeter-wave coordinated monostatic sensing measurement instances, where one is a sequential mode and the other is a parallel mode. For example, FIG. 4 is a schematic diagram of a sequential mode instance of millimeter-wave coordinated monostatic sensing measurement provided by an exemplary embodiment of the present application, and FIG. 5 is a schematic diagram of a parallel mode instance of millimeter-wave coordinated monostatic sensing measurement provided by an exemplary embodiment of the present application.

As shown in FIG. 4 and FIG. 5, a similarity between the sequential mode and the parallel mode is that a sensing initiator needs to separately transmit a millimeter-wave sensing request (DMG sensing request) frame to each sensing responder in an initial phase of the sensing measurement instance, and each sensing responder needs to reply with a millimeter-wave sensing response (DMG sensing response) frame to the sensing initiator within a short interframe space (SIFS) time. The DMG sensing request may also be referred to as an RQ, and the DMG sensing response may also be referred to as an RSP.

As shown in FIG. 4 and FIG. 5, a difference between the sequential mode and the parallel mode is that, in the sequential mode, respective sensing responders sequentially transmit and sequentially receive monostatic sensing measurement frames (monostatic PPDU) by themselves to sense the environment, and each transmits a sensing measurement report frame (DMG sensing measurement report) to the sensing initiator within a SIFS time; and in the parallel mode, respective sensing responders simultaneously transmit and simultaneously receive the monostatic sensing measurement frames to sense the environment, and then sequentially transmit a DMG sensing measurement report frame to the sensing initiator.

It should be noted that in FIG. 4 and FIG. 5, grids above a horizontal line corresponding to the sensing initiator or the sensing responder represent frames transmitted by a device, and grids below the horizontal line (blank grids) represent frames received by the device, where the transmitted frames and the received frames correspond to each other; and grids whose middle is directly at the horizontal line corresponding to the sensing responder represent frames transmitted and received by the sensing responder itself, e.g., the monostatic sensing measurement frame transmitted and received by the sensing responder itself. For example, in FIG. 4, the sensing initiator transmits an RQ (indicated by the grids above the horizontal line corresponding to the sensing initiator) to a sensing responder station A, and accordingly, the sensing responder station A will receive the RQ (indicated by the blank grids below the horizontal line corresponding to the sensing responder station A). The meaning of the blank grids in other drawings of the present application may be referred to the above description and will not be elaborated on here.

The following is a description of a frame format of a DMG sensing measurement setup element.

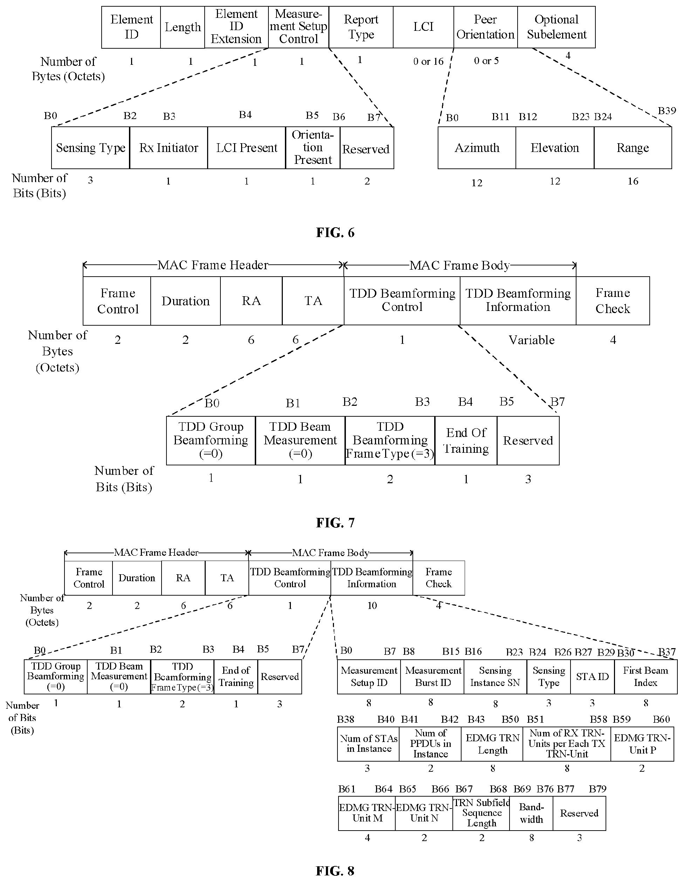

FIG. 6 is a schematic diagram of a frame format of a DMG sensing measurement setup element provided by an exemplary embodiment of the present application. As shown in FIG. 6, the DMG sensing measurement setup element carries information setting a DMG sensing measurement, and the DMG sensing measurement setup element is located in a DMG sensing measurement setup request frame and a DMG sensing measurement setup response frame. The DMG sensing measurement setup element includes an element ID field, a length field, an element ID extension field, a measurement setup control field, a report type field, an LCI field, a peer orientation field, and an optional subelement field. The measurement setup control field includes the following fields.

Sensing type: indicates a type of the DMG sensing measurement, with specific values and meanings thereof shown in Table 1.

**Table 1**

| Value | Meaning |
|---|---|
| 0 | Coordinated Monostatic |
| 1 | Coordinated Bistatic |
| 2 | Bistatic |
| 3 | Multistatic |
| 4 | Reserved |

Rx Initiator: indicates that a sensing initiator in a bistatic sensing type is a sensing receiver or a sensing transmitter, where a value of 1 indicates that the sensing initiator is the sensing receiver, and the value of 0 indicates that the sensing initiator is the sensing transmitter.

LCI Present: indicates whether the LCI field exists in the DMG sensing measurement setup element, where a value of 1 indicates that the LCI field exists in the DMG sensing measurement setup element, and the value of 0 indicates that the LCI field does not exist in the DMG sensing measurement setup element.

Orientation Present: indicates whether the peer orientation field exists in the DMG sensing measurement settings element, where a value of 1 indicates that the peer orientation field exists in the DMG sensing measurement setup element, and the value of 0 indicates that the peer orientation field does not exist in the DMG sensing measurement setup element.

Moreover, the report type field in the DMG sensing measurement setup element is used to indicate a type that the sensing initiator expects the sensing responder to report, with values and meanings thereof shown in Table 2.

**Table 2**

| Value | Meaning |
|---|---|
| 0 | No Report |
| 1 | CSI |
| 2 | DMG Sensing Image Direction (DMG Sensing Direction Image) |
| 3 | DMG Sensing Image Range-Doppler (DMG Sensing Image-Doppler Image) |
| 4 | DMG Sensing Image Range-Direction (DMG Sensing Range-direction Image) |
| 5 | DMG Sensing Image Doppler-Direction (DMG Sensing Doppler-Direction Image) |
| 6 | DMG Sensing Image Range-Doppler Direction (DMG Sensing Image-Doppler Image) |
| 7 | **Target** |
| 8 - 255 | Reserved |

In addition, the LCI field carries an LCI field in a location configuration information report.

The peer orientation field is used to indicate a direction and range of the peer device, and includes three subfields: azimuth, elevation, and range.

The optional subelement field includes zero or more subelements, and all of the subelements and an order of the subelements are shown in Table 3 below.

**Table 3**

| Subelement ID | Subelement name | Extendibility |
|---|---|---|
| 1 | Transmit (TX) Beam List | Yes |
| 2 | Receive (RX) Beam List | Yes |
| 3 | DMG Sensing Scheduling | Yes |
| 4 - 255 | Reserved | No |

The following is a description of a time division duplexing (TDD) beamforming frame.

FIG. 7 is a schematic diagram of a format of a beamforming frame provided by an exemplary embodiment of the present application. As shown in FIG. 7, the TDD beamforming frame is a type of control frame. A MAC frame body of the TDD beamforming frame consists of two parts: a TDD beamforming control field and a TDD beamforming information field. Meanings of the fields in a MAC frame header of the TDD beamforming frame are as follows.
• Frame Control: indicates information such as a type of the MAC frame, where the information includes information indicating that the frame is the TDD beamforming frame.
• Duration: indicates a transmitting time length of the frame.
• Receiver address (RA): indicates a MAC address of a frame receiver.
• Transmitter address (TA): indicates a MAC address of a frame transmitter.
• TDD beamforming frame type: indicates a type of the TDD beamforming frame, with specific values and meanings thereof shown in Table 4.

**Table 4**

| Value | Meaning |
|---|---|
| 0 | TDD Sector Sweep (SSW) |
| 1 | TDD SSW Feedback |
| 2 | TDD SSW Acknowledgement (Ack) |
| 3 | DMG Sensing |

As shown in Table 4, a value of the TDD beamforming frame type field is 0, 1 or 2, each of which indicates that the TDD beamforming frame is a type related to beam training, and the type is irrelevant to the method provided in the embodiments of the present application; and the value of 3 indicates that the TDD beamforming frame is a type related to the DMG sensing.

In a case where the value of the TDD beamforming frame type field is 3, a TDD group beamforming field and a TDD beam measurement field together indicate a purpose of a TDD beamforming frame in the DMG sensing, with specific values and meanings thereof shown in Table 5.

**Table 5**

| Value of TDD group beamforming field | Value of TDD beam measurement field | Frame purpose |
|---|---|---|
| 0 | 0 | DMG Sensing Request |
| 0 | 1 | DMG Sensing Response |
| 1 | 0 | DMG Sensing Poll |
| 1 | 1 | Reserved |

As shown in Table 5, in a case where the value of the TDD group beamforming field is 0 and the value of the TDD beam measurement field is 0, it indicates that the TDD beamforming frame is the DMG sensing request frame (sensing request frame); in a case where the value of the TDD group beamforming field is 0 and the value of the TDD beam measurement field is 1, it indicates that the TDD beamforming frame is the DMG sensing response frame (sensing response frame); and in a case where the value of the TDD group beamforming field is 1 and the value of the TDD beam measurement field is 0, it indicates that the TDD beamforming frame is the DMG sensing poll frame (sensing poll frame).

The following is a description of the DMG sensing request frame.

FIG. 8 is a schematic diagram of a format of a sensing request frame provided by an exemplary embodiment of the present application. As shown in FIG. 8, meanings of fields in the TDD beamforming information field of the DMG sensing request frame are as follows:
• Measurement setup ID: an identifier of a sensing measurement setup relevant to the frame.
• Measurement burst ID: an identifier of a sensor measurement burst relevant to the frame.
• Sensing instance sequential number (SN): indicates a sequence number of a sensing measurement instance in a measurement burst.
• Sensing type: indicates a sensing type requested by the frame, with specific values and meanings shown in Table 6:

**Table 6**

| Value | Meaning |
|---|---|
| 0 | Coordinated Monostatic |
| 1 | Coordinated Bistatic |
| 2 | Multistatic |
| 3 | Reserved |

• STA ID: indicates an order in which a STA participates in a sensing measurement instance.
• First beam index: indicates an index of a transmit beam used first in a sensing measurement instance.
• Num of STAs in instance: indicates the number of STAs participating in a sensing measurement instance.
• Num of PPDUs in instance: indicates the number of PPDUs appearing in a sensing measurement instance.
• Enhanced directional multi-gigabit (EDMG) TRN length: indicates the number of TRN-units contained in a PPDU.
• Num of receive (RX) TRN-Units per each TX TRN-Unit: indicates the number of TRN-Units transmitted consecutively in a same direction.
• EDMG TRN-Unit P: indicates the number of TRN subfields in a TRN-Unit whose beam direction is directed toward a peer device.
• EDMG TRN-Unit M: indicates the number of TRN subfields with variable beam directions in a TRN-Unit.
• EDMG TRN-Unit N: indicates the number of TRN subfields that are continuously transmitted by using a same beam direction among TRN-Unit-M TRN subfields.
• TRN subfield sequence length: indicates a length of a Gray sequence used by each TRN subfield.
• Bandwidth: indicates a bandwidth used to transmit TRN fields.

The following is a description of the DMG sensing response frame.

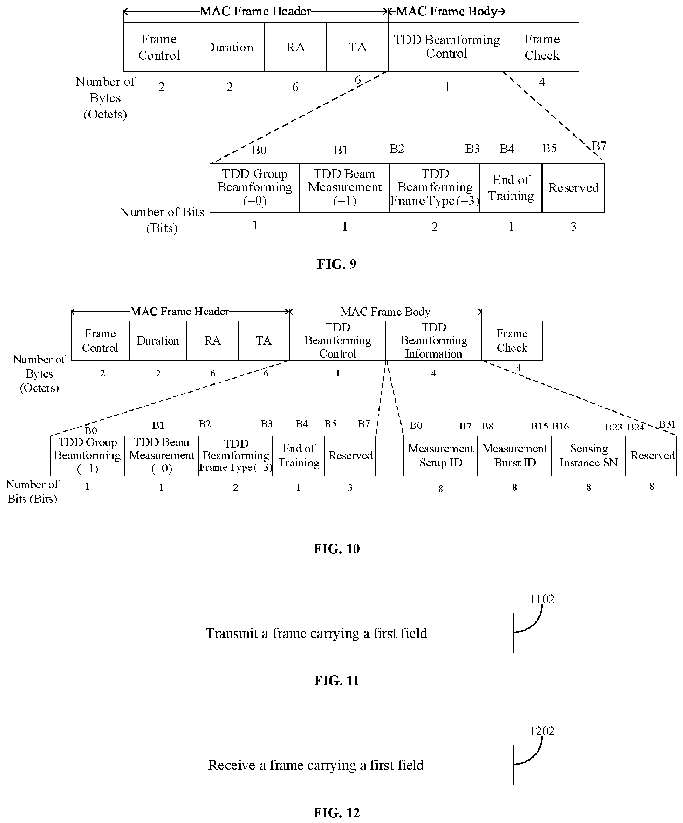

FIG. 9 is a schematic diagram of a format of a sensing response frame provided by an exemplary embodiment of the present application. As shown in FIG. 9, a MAC frame body of the DMG sensing response frame includes only the TDD beamforming control field.

The following is a description of the DMG sensing poll frame.

FIG. 10 is a schematic diagram of a format of a sensing poll frame provided by an exemplary embodiment of the present application. As shown in FIG. 10, meanings of fields in the TDD beamforming information field of the DMG sensing poll frame are as follows:
• Measurement setup ID: indicates an identifier of a sensing measurement setup relevant to the DMG sensing poll frame.
• Measurement burst ID: indicates an identifier of a sensing measurement burst relevant to the DMG sensing poll frame.
•Sensing instance sequential number (SN): indicates an identifier of a sensing measurement instance relevant to the DMG sensing poll frame.

Optionally, specific information in a coordinated monostatic sensing process is implemented in the following three cases.

Exemplarily, sensing types of the coordinated monostatic sensing include two modes: sequential coordinated monostatic and parallel coordinated monostatic. A similarity between the sequential coordinated monostatic and the parallel coordinated monostatic is that: a sensing initiator needs to separately transmit a DMG sensing request frame to each sensing responder in an initial phase of a sensing measurement instance, and each sensing responder needs to reply a DMG sensing response frame to the sensing initiator within a SIFS time; however, in the sequential coordinated monostatic mode, multiple sensing responders will sequentially transmit and sequentially receive monostatic sensing measurement frames (monostatic PPDUs) to sense the environment, and separately transmit sensing measurement report frames (DMG sensing measurement report) to the sensing initiator within the SIFS time; and in the parallel coordinated monostatic mode, multiple sensing responders simultaneously transmit and simultaneously receive monostatic PPDUs to sense the environment, and then sequentially transmit the sensing measurement report frames to the sensing initiator. That is, the sensing type of the coordinated monostatic sensing is implemented in different modes, which will lead to differences in the situations in which the sensing responder transmits and receives the monostatic sensing measurement frame. However, in a related art, no matter whether a sensing measurement setup phase or a sensing measurement instance phase, there is no field that can more directly and clearly indicate the sensing type of the coordinated monostatic sensing.

Exemplarily, in a measurement process of the coordinated monostatic sensing, there are two manners for reporting the coordinated monostatic sensing measurement: without polling and with polling. However, in the related art, whether in the sensing measurement setup phase or the sensing measurement instance phase, there is no field that can distinguish these two manners more directly and clearly, which leads to a problem of unclear indication.

Exemplarily, the related art does not make a clear decision on a format and length of a monostatic PPDU, and only requires that a receiving address (RA) in a physical layer service data unit (PSDU) carried in the monostatic PPDU is equal to a transmitting address (TA). Therefore, interference problems will occur under a parallel mode of the coordinated monostatic sensing type. That is, since a length of a monostatic PPDU of a station B is greater than a length of a monostatic PPDU of a station A, the monostatic PPDU of the station B overlaps with a Report frame of the station A, thereby causing the interference between the station A and the station B.

Therefore, in a monostatic sensing measurement method process above, after the sensing initiator transmits a frame to the sensing responder, not only can the sensing responder not directly read the specific information of the coordinated monostatic sensing process through a field reading manner, but it is also easy for the sensing responder to obtain wrong specific information due to distortion in a transmission process, resulting in the problem of an unclear indication.

In the method provided in the embodiments of the present application, a sensing initiator transmits a frame carrying a first field to a sensing responder. Since the first field is a specific field of sequential coordinated monostatic or parallel coordinated monostatic, and/or the first field has a specific meaning in the sequential coordinated monostatic or the parallel coordinated monostatic, a specific problem corresponding to information content carried in the first field can be solved according to a specific type of the first field, for example, it is possible to distinguish a sensing type of the coordinated monostatic sensing, and/or it is possible to distinguish a polling status of coordinated monostatic sensing measurement report, and/or it is possible to limit the maximum length of the monostatic PPDU. After receiving the frame transmitted by the sensing initiator, the sensing responder reads the field in the frame, which not only improves the sensing accuracy of the sensing responder, but also facilitates the sensing responder to have a more comprehensive understanding and analysis of a process of the coordinated monostatic sensing measurement.

FIG. 11 is a flowchart of a sensing measurement method provided by an exemplary embodiment of the present application, where the method is applied in a sensing measurement device. The sensing measurement device includes a sensing initiating device (sensing initiator) or a sensing responding device (sensing responder). Taking the sensing initiator performing the sensing measurement method as an example, the method includes:
Step 1102: transmitting a frame carrying a first field.

The first field is a specific field of sequential coordinated monostatic or parallel coordinated monostatic, and/or the first field has a specific meaning in the sequential coordinated monostatic or the parallel coordinated monostatic.

The sensing measurement method above is applied to the coordinated monostatic sensing measurement. In a process of the coordinated monostatic sensing measurement, the sensing initiator triggers each sensing responder participating in the collaboration, to execute all or some of phases in the sensing measurement process.

As shown in FIG. 3, a schematic diagram of the process of the millimeter-wave sensing provided by an exemplary embodiment of the present application is provided. The process includes a session setup phase, a millimeter-wave sensing measurement setup phase and a sensing measurement phase. Here, the sensing measurement phase consists of multiple sensing measurement bursts, and each burst consists of multiple sensing measurement instances (DMG sensing instances). There are two modes of millimeter-wave coordinated monostatic sensing measurement instances, one is the sequential coordinated monostatic (sequential mode type of the coordinated monostatic), and the other is the parallel coordinated monostatic (parallel mode type of the coordinated monostatic).

Exemplarily, the first field is implemented as a specific field to indicate that the first field is a new field added in the frame, and the field is used to carry specific information content. For example: at least one first field is added in the sensing measurement setup frame, or at least one first field is added in the sensing request frame.

Exemplarily, the first field has a specific meaning to indicate that the first field is an existing field in the frame. A value range of the existing field is adjusted, and specific information content carried is represented by a set value; or a meaning of the existing field is defined in multiple levels, and the specific information content may be obtained through the existing field.

Optionally, a first frame carrying a sensing type field is transmitted, where the sensing type field is used to indicate that the sensing type is the sequential coordinated monostatic or the parallel coordinated monostatic. The first frame is at least one of the following frames: a millimeter-wave DMG sensing measurement setup request frame; a millimeter-wave DMG sensing measurement setup response frame, or a millimeter-wave DMG sensing request frame.

Optionally, a second frame carrying a station identifier field is transmitted, where the station identifier field is used to indicate an order in which a station participates in the sequential coordinated monostatic. The second frame is the DMG sensing request frame.

Optionally, a third frame carrying a report poll field is transmitted, where the report poll field is used to indicate whether reporting of the sensing measurement result requires polling. The third frame is at least one of the following frames: a millimeter-wave DMG sensing measurement setup request frame, a millimeter-wave DMG sensing measurement setup response frame, or a millimeter-wave DMG sensing request frame.

Optionally, a fourth frame carrying a maximum duration field of a monostatic PPDU is transmitted, where the maximum duration field of the monostatic PPDU is used to indicate a maximum duration of the monostatic PPDU used by a sensing responder. The fourth frame is at least one of the following frames: a DMG sensing measurement setup request frame, or a DMG sensing measurement setup response frame.

Exemplarily, the first field is carried in at least one of the first frame, the second frame, the third frame, or the fourth frame.

Optionally, the frame carries at least one first field, and different types of first fields correspond to different types of information content, and the different types of the information content may solve different problems.

Problem 1: how to distinguish the sensing type of the coordinated monostatic sensing, that is, to distinguish whether it is the sequential coordinated monostatic or the parallel coordinated monostatic.

Problem 2: how to distinguish the polling status of the coordinated monostatic sensing measurement report, that is, to distinguish whether there is no polling or there is a polling.

Problem 3: how to limit the length of a monostatic PPDU, that is, a maximum length limit of the monostatic PPDU.

In view of the above problems, the sensing initiator transmits the first field of a corresponding type to solve the problem.

Optionally, in a case of implementing a phase of distinguishing the coordinated monostatic sensing type, the sensing initiator transmits the first frame carrying the sensing type field, and/or transmits the second frame carrying the station identifier field, thus enabling to solve Problem 1 above.

Optionally, in a case of distinguishing the polling status of the coordinated monostatic sensing measurement report, the sensing initiator transmits the third frame carrying the report poll field, thereby solving Problem 2 above.

Optionally, in a case of limiting the length of the monostatic PPDU, the sensing initiator transmits the fourth frame carrying the maximum length field of the monostatic PPDU, thereby solving Problem 3 above.

In conclusion, in the method provided in the embodiments, a sensing initiator transmits a frame carrying a first field to a sensing responder. Since the first field is a specific field of sequential coordinated monostatic or parallel coordinated monostatic, and/or the first field has a specific meaning in the sequential coordinated monostatic or the parallel coordinated monostatic, at least one of three specific problems corresponding to information content carried in the first field can be solved according to a specific type of the first field, for example, it is possible to distinguish a sensing type of the coordinated monostatic, and/or it is possible to distinguish the polling status of the coordinated monostatic sensing measurement report, and/or it is possible to limit the maximum length of the monostatic PPDU. This makes it easier for the sensing responder to have a more comprehensive understanding and analysis of a process of the coordinated monostatic sensing measurement.

Exemplarily, based on the frame, which carries a first field of a different type as described above, transmitted by the sensing initiator to the sensing responder, the sensing initiator may implement a purpose of conveying different information to the sensing responder. As shown in FIG. 12, a flowchart of a sensing measurement method provided by an exemplary embodiment of the present application is provided. The method is applied in a sensing measurement device. The sensing measurement device includes a sensing initiating device (sensing initiator) or a sensing responding device (sensing responder). Exemplarily, taking the sensing responder performing the method as an example, the method includes:
Step 1202: receiving a frame carrying a first field.

The first field is a specific field of sequential coordinated monostatic or parallel coordinated monostatic, and/or the first field has a specific meaning in the sequential coordinated monostatic or the parallel coordinated monostatic.

The sensing measurement method above is applied to the coordinated monostatic sensing measurement. In a process of the coordinated monostatic sensing measurement, the sensing initiator triggers each sensing responder participating in the collaboration, to execute all or some of phases in the sensing measurement process. In the process of the coordinated monostatic sensing measurement process, the sensing initiator triggers each sensing responder participating in the collaboration, to execute all or some of phases in the sensing measurement process.

For example, in the sequential coordinated monostatic, a request phase includes a step where the sensing initiator transmits a sensing request frame to the sensing responder and the sensing responder transmits a sensing response frame to the sensing initiator, a sensing measurement phase includes a step where the sensing responder transmits a monostatic sensing measurement frame, and a reporting phase includes a step where the sensing responder transmits a sensing measurement report frame to the sensing initiator; and in the parallel coordinated monostatic, a request phase includes a step where the sensing initiator transmits a sensing request frame to the sensing responder and the sensing responder transmits a sensing response frame to the sensing initiator, a sensing measurement phase includes a step where the sensing responder transmits a monostatic sensing measurement frame, and a reporting phase includes a step where the sensing responder transmits a sensing measurement report frame to the sensing initiator.

Optionally, a first frame carrying a sensing type field is received, where the sensing type field is used to indicate that a sensing type is the sequential coordinated monostatic or the parallel coordinated monostatic. The first frame is at least one of the following frames: a millimeter-wave DMG sensing measurement setup request frame, a millimeter-wave DMG sensing measurement setup response frame, or a millimeter-wave DMG sensing request frame.

Optionally, a second frame carrying a station identifier field is received, where the station identifier field is used to indicate an order in which a station participates in the sequential coordinated monostatic. The second frame is the DMG sensing request frame.

Optionally, a third frame carrying a report poll field is received, where the report poll field is used to indicate whether reporting of a sensing measurement result requires polling. The third frame is at least one of the following frames: a millimeter-wave DMG sensing measurement setup request frame, a millimeter-wave DMG sensing measurement setup response frame, or a millimeter-wave DMG sensing request frame.

Optionally, a fourth frame carrying a maximum duration field of a monostatic PPDU is received, where the maximum duration field of the monostatic PPDU is used to indicate a maximum duration of the monostatic PPDU used by a sensing responder. The fourth frame is at least one of the following frames: a DMG sensing measurement setup request frame, or a DMG sensing measurement setup response frame.

Exemplarily, the first field is carried in at least one of the first frame, the second frame, the third frame, or the fourth frame.

In conclusion, in the method provided in the embodiments, a frame transmitted by the sensing initiator to the sensing responder is a frame carrying a first field, where the first field is a specific field of sequential coordinated monostatic or parallel coordinated monostatic, therefore, at least one of three specific problems corresponding to information content carried in the first field can be solved according to a specific type of the first field. After receiving the frame transmitted by the sensing initiator, the sensing responder can distinguish a sensing type of the coordinated monostatic sensing, and/or can distinguish a polling status of the coordinated monostatic sensing measurement report, and/or can limit the maximum length of the monostatic PPDU. This not only improves the sensing accuracy of the sensing responder, but also enables the sensing responder to have more comprehensive understanding and analysis of a process of the coordinated monostatic sensing measurement based on reading of the first field.

### Regarding Problem 1 above:

In the related art, types of the coordinated monostatic sensing include two modes: the sequential coordinated monostatic and the parallel coordinated monostatic. However, neither in the DMG sensing measurement setup element nor in the DMG sensing request frame, none of a field may accurately distinguish a sequential mode type and a parallel mode type in the coordinated monostatic sensing. Therefore, there is a problem of an unclear indication of the sequential coordinated monostatic and the parallel coordinated monostatic.

By adopting the sensing measurement method provided in the embodiments of the present application, in a case of distinguishing the sensing type of the coordinated monostatic sensing, the millimeter-wave DMG sensing measurement setup frame and/or a format of the millimeter-wave DMG sensing measurement setup frame are enabled to carry the first field through being improved.

In an optional embodiment, the sensing initiator transmits the first frame carrying the sensing type field; and the sensing responder receives the first frame carrying the sensing type field.

Here, the sensing type field is used to indicate that the sensing type is the sequential coordinated monostatic or the parallel coordinated monostatic, and the sensing type field is used as a representation form of the first field.

Exemplarily, the sensing type is used to indicate a mode type of the coordinated monostatic, i.e., to indicate that the coordinated monostatic belongs to the sequential coordinated monostatic or the parallel coordinated monostatic. The first frame carries the sensing type field, so by reading the first frame, it can be determined that the first frame belongs to the sequential coordinated monostatic, or it can be determined that the first frame belongs to the parallel coordinated monostatic.

In an optional embodiment, the first frame is at least one of the following frames: a DMG sensing measurement setup request frame, a DMG sensing measurement setup response frame, or a DMG sensing request frame.

Here, the DMG sensing measurement setup request frame and the sensing measurement setup response frame are types of frames in the sensing measurement setup phase, and the DMG sensing request frame is a type of a frame in the sensing measurement instance phase.

Exemplarily, the DMG sensing measurement setup request frame is used to indicate a frame transmitted by a sensing measurement device A to a sensing measurement device B during the sensing measurement setup phase; and the DMG sensing measurement setup response frame is used to indicate a frame transmitted by the sensing measurement device B to the sensing measurement device A during the sensing measurement setup phase. For example, taking the sensing measurement device A implemented as a sensing initiator and the sensing measurement device B implemented as a sensing responder as an example for illustration, the sensing initiator transmits the DMG sensing measurement setup request frame to the sensing responder, and the sensing responder selectively transmits the DMG sensing measurement setup response frame to the sensing initiator based on the DMG sensing measurement setup request frame transmitted by the sensing initiator. For example, in a case where the DMG sensing measurement setup request frame transmitted by the sensing initiator does not meet a reception requirement of the sensing responder, the sensing responder transmits the DMG sensing measurement setup response frame to the sensing initiator.

Optionally, since the DMG sensing measurement setup request frame and the DMG sensing measurement setup response frame are both types of frames in the sensing measurement setup phase, the DMG sensing measurement setup frame is used to indicate the frames in the sensing measurement setup phase, which include the DMG sensing measurement setup request frame and the DMG sensing measurement setup response frame in the sensing measurement setup phase, thereby making the following description process of character adjustment in the sensing measurement setup phase.

Exemplarily, the following description is made by taking the first frame implemented as the above different types of frames as an example.

In an optional embodiment, the first frame is implemented as the DMG sensing measurement setup frame (the DMG sensing measurement setup request frame, or the DMG sensing measurement setup response frame).

Exemplarily, as shown in FIG. 6, a schematic diagram of the format of the DMG sensing measurement setup frame (the DMG sensing measurement setup request frame, or the DMG sensing measurement setup response frame) is provided. The DMG sensing measurement setup frame includes a measurement setup control field, and the measurement setup control field includes a sensing type subfield, where the sensing type subfield is used to indicate a type of the DMG sensing measurement.

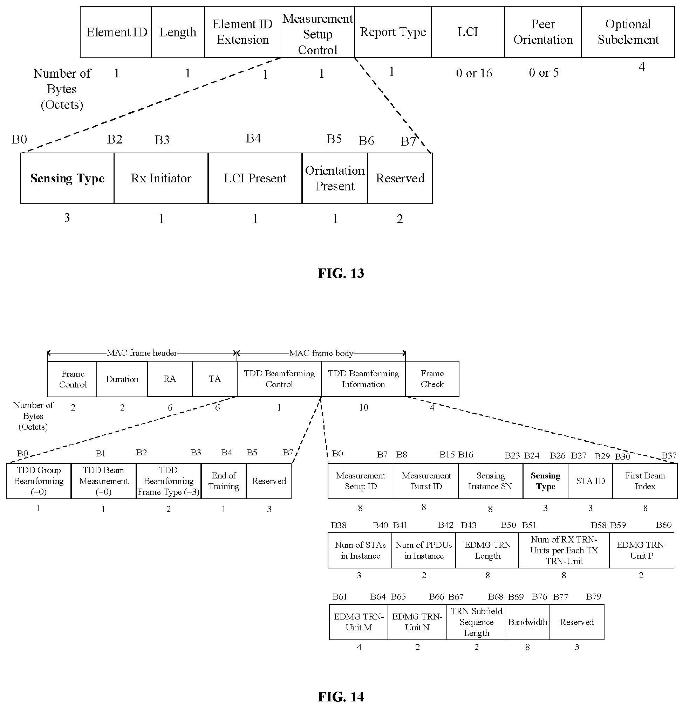

Optionally, the sensing measurement method provided in the embodiments of the present application is used to modify the sensing type subfield under the measurement setup control field in the DMG sensing measurement setup frame. As shown in FIG. 13, the sensing type subfield (in bold) under the measurement setup control field in the DMG sensing measurement setup frame shown in FIG. 6 is modified to obtain the sensing type subfield. A sensing type under the coordinated monostatic can be determined through a value of the sensing type subfield.

Exemplarily, specific values and meanings of the sensing type subfield are shown in Table 7 below.

**Table 7**

| Value | Meaning |
|---|---|
| 0 | Sequential Coordinated Monostatic |
| 1 | Parallel Coordinated Monostatic |
| 2 | Coordinated Bistatic |
| 3 | Bistatic |
| 4 | Multistatic |
| 5 - 7 | Reserved |

Here, in a case where a value of the sensing type subfield is 0, it means that the type of DMG sensing measurement is the sequential coordinated monostatic; in a case where the value of the sensing type subfield is 1, it means that the DMG sensing type is the parallel coordinated monostatic; in a case where the value of the sensing type subfield is 2, it means that the DMG sensing type is the coordinated bistatic; in a case where the value of the sensing type subfield is 3, it means that the DMG sensing type is the bistatic; and in a case where the value of the sensing type subfield is 4, it means that the DMG sensing type is the multistatic.

That is, in a case where the value of the sensing type subfield is 0, the DMG sensing type under the coordinated monostatic is determined to be the sequential coordinated monostatic; and in a case where the value of the sensing type subfield is 1, the DMG sensing type under the coordinated monostatic is determined to be the parallel coordinated monostatic.

It is worth noting that specific values of the sensing type subfield above are only illustrative examples. The value of the sensing type subfield may also adopt other setting schemes, for example, setting the value to 0 represents the sequential coordinated monostatic and setting the value to 4 represents the parallel coordinated monostatic; or setting the value to 4 represents the sequential coordinated monostatic, and setting the value to 0 represents the parallel coordinated monostatic, which are not limited in the embodiments of the present application.

In addition, meaning names of the sequential coordinated monostatic and the parallel coordinated monostatic above are only illustrative examples. For example, the sequential coordinated monostatic may also be called a sequential mode of the coordinated monostatic; and the parallel coordinated monostatic may also be called a parallel mode of the coordinated monostatic, which are not limited in the embodiments of the present application.

Optionally, the sensing type subfield is used as the first field, where the first field carries the sensing type field; or a measurement setup control field corresponding to the sensing type subfield is used as the first field, where the first field carries the sensing type field.

In the embodiments of the present application, the sensing type subfield under the measurement setup control field in the sensing measurement setup frame is adjusted. Through the value of the sensing type subfield, the mode type of the coordinated monostatic can be distinguished more accurately, that is, it can be determined more quickly whether the coordinated monostatic belongs to the sequential coordinated monostatic or the parallel coordinated monostatic.

In an optional embodiment, the first frame is implemented as a DMG sensing request frame.

Exemplarily, as shown in FIG. 8, a schematic diagram of a format of the DMG sensing request frame is provided. The DMG sensing request frame includes a TDD beamforming information field, and the TDD beamforming information field includes a sensing type subfield, where the sensing type subfield is used to indicate the type of the DMG sensing measurement.

Optionally, the sensing measurement method provided in the embodiments of the present application is used to modify the sensing type subfield under the TDD beamforming information field in the DMG sensing request frame. As shown in FIG. 14, the sensing type subfield (in bold) under the TDD beamforming information field in the DMG sensing request frame shown in FIG. 8 is modified to obtain the sensing type subfield. The sensing type under the coordinated monostatic can be determined through a value of the sensing type subfield.

Exemplarily, specific values and meanings of the sensing type subfield are shown in Table 8 below.

**Table 8**

| Value | Meaning |
|---|---|
| 0 | Sequential Coordinated Monostatic |
| 1 | Parallel Coordinated Monostatic |
| 2 | Coordinated Bistatic |
| 3 | Multistatic |
| 4 - 7 | Reserved |

Here, in a case where a value of the sensing type subfield is 0, it means that the DMG sensing type is the sequential coordinated monostatic; in a case where the value of the sensing type subfield is 1, it means that the DMG sensing type is the parallel coordinated monostatic; in a case where the value of the sensing type subfield is 2, it means that the DMG sensing type is the coordinated bistatic; and in a case where the value of the sensing type subfield is 3, it means that the DMG sensing type is the multistatic.

That is, in a case where the value of the sensing type subfield is 0, the DMG sensing type under the coordinated monostatic is determined to be the sequential coordinated monostatic; and in a case where the value of the sensing type subfield is 1, the DMG sensing type under the coordinated monostatic is determined to be the parallel coordinated monostatic.

Exemplarily, as shown in Table 7 above, in a sensing measurement setup phase (the sensing measurement setup request frame, or the sensing measurement setup response frame), the value of the sensing type subfield is 3, which indicates that the sensing type is the bistatic; and in the sensing measurement instance phase (the DMG sensing request frame), a case where the sensing type is the bistatic is indicated by other frames or other fields, so the bistatic is not included in Table 8 above. The above are only illustrative examples, and the embodiments of the present application are not limited to this.

Optionally, the sensing type subfield is used as the first field, where the first field carries the sensing type field; or a TDD beamforming information field corresponding to the sensing type subfield is used as the first field, where the first field carries the sensing type field.

It is worth noting that specific values of the sensing type subfield above are only illustrative examples and the value of the sensing type subfield may also adopt other setting schemes, for example, setting the value to 0 represents the sequential coordinated monostatic and setting the value to 7 represents the parallel coordinated monostatic; or setting the value to 4 represents the sequential coordinated monostatic, and setting the value to 5 represents the parallel coordinated monostatic, which are not limited in the embodiments of the present application.

In addition, meaning names of the sequential coordinated monostatic and the parallel coordinated monostatic above are only illustrative examples. For example, the sequential coordinated monostatic may also be called a sequential mode of the coordinated monostatic; and the parallel coordinated monostatic may also be called a parallel mode of the coordinated monostatic, which are not limited in the embodiments of the present application.

In the embodiments of the present application, the sensing type subfield under the measurement setup control field in the sensing measurement setup frame is adjusted. Through the value of the sensing type subfield, the mode type of the coordinated monostatic can be distinguished more accurately, that is, it can be determined more quickly whether the coordinated monostatic belongs to the sequential coordinated monostatic or the parallel coordinated monostatic.

In an optional embodiment, a second frame carrying a station identifier field is transmitted.

Here, the station identifier field is used to indicate an order in which a station participates in the sequential coordinated monostatic.

Exemplarily, different STAs (stations) each have a corresponding identifier. In a case where the coordinated monostatic is implemented as a sequential coordinated monostatic mode, different STAs have different corresponding transmitting orders, and the different transmitting orders are represented by station identifier fields.

That is, the transmitting order of different STAs under the sequential coordinated monostatic mode can be determined by reading the multiple station identifier fields.

In an optional embodiment, the first frame is implemented as a DMG sensing request frame, and the second frame is implemented as a DMG sensing request frame.

Here, the first frame and the second frame are implemented as the same frame.

Exemplarily, as shown in FIG. 8, a schematic diagram of a format of the DMG sensing request frame is provided. The DMG sensing request frame includes a TDD beamforming information field, and the TDD beamforming information field includes a sensing type subfield and a STA ID subfield, where the sensing type subfield is used to indicate a type of the DMG sensing measurement, and the STA ID subfield is used to indicate an identifier of the SAT.

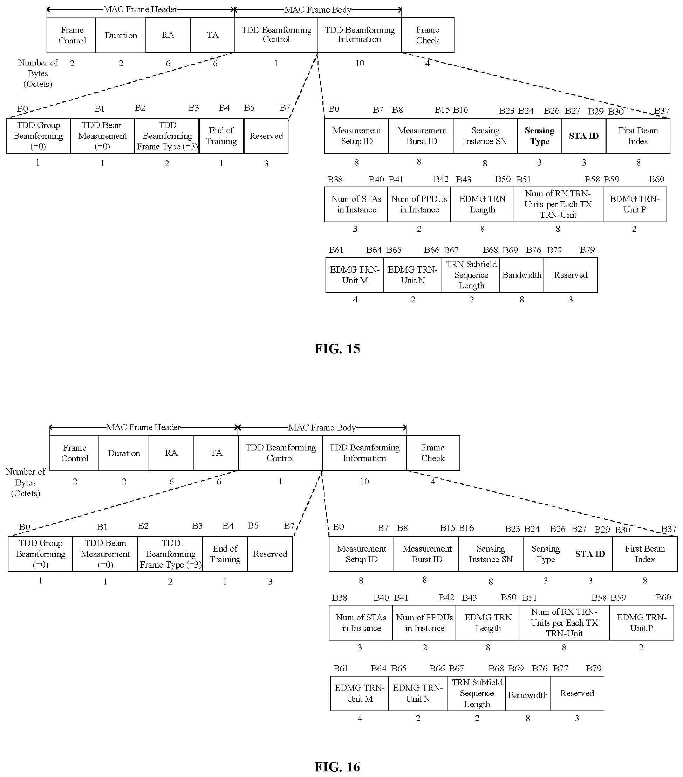

Optionally, the sensing measurement method provided in the embodiments of the present application is used to modify the sensing type subfield and the STA ID subfield under the TDD beamforming information field in the DMG sensing request frame. As shown in FIG. 15, the sensing type subfield (in bold) and the STA ID subfield (in bold) under the TDD beamforming information field in the DMG sensing request frame shown in FIG. 8 are modified to obtain the sensing type subfield and the STA ID subfield. A sensing type under the coordinated monostatic can be determined through a value of the sensing type subfield and a value of the STA ID subfield.

Exemplarily, specific values and meanings of the sensing type subfield are shown in Table 8 above. That is, in a case where the value of the sensing type subfield is 0, the DMG sensing type under the coordinated monostatic is determined to be the sequential coordinated monostatic; and in a case where the value of the sensing type subfield is 1, the DMG sensing type under the coordinated monostatic is determined to be the parallel coordinated monostatic.

Optionally, the STA ID subfield is processed differently based on the sensing type subfield.

Exemplarily, in a case where the sensing type of the DMG sensing request frame (the first frame) is the sequential coordinated monostatic, the station identifier field is used to indicate the order in which a station participates in the sequential coordinated monostatic. Here, the STA ID subfield indicates a station identifier character.

Exemplarily, in a case where the value of the sensing type subfield is 3, the type of the DMG sensing measurement is the multistatic, which indicates that the STA receives an index of a synchronization subfield in an EDMG multistatic sensing PPDU; in a case where the value of the sensing type subfield is 2, the type of the DMG sensing measurement is the coordinated bistatic, so the STA ID subfield represents an identifier of the STA, and also indicates an order in which the STA participates in the sensing measurement; in a case where the value of the sensing type subfield is 1, the type of the DMG sensing measurement is the parallel coordinated monostatic, so the STA ID subfield represents the identifier of the STA; and in a case where the value of the sensing type subfield is 0, it represents that the type of the DMG sensing measurement is the sequential coordinated monostatic, and it is determined that the STA ID subfield represents the identifier of the STA, and also indicates the order in which the STA participates in the sensing measurement.

Optionally, the sensing type subfield and the STA ID subfield are used as the first field, so the first field carries the sensing type field; or a TDD beamforming information field corresponding to both the sensing type subfield and the STA ID subfield is used as the first field, so the first field carries the sensing type field.

It is worth noting that specific values of the sensing type subfield above are only illustrative examples, and the value of the sensing type subfield may also adopt other setting schemes, which are not limited in the embodiments of the present application.

In the embodiments of the present application, the sensing type subfield and the STA ID subfield under the measurement setup control field in the sensing measurement setup frame are adjusted. Through the value of the sensing type subfield, the mode type of the coordinated monostatic can be distinguished more accurately. Further, the STA ID subfield can be used to determine the STA identifier and the order in which the STA participates in the sensing, enabling the sensing responder to have more comprehensive understanding of the content information during the sensing measurement process.

In an optional embodiment, the second frame is implemented as the DMG sensing request frame.

Exemplarily, as shown in FIG. 8, a schematic diagram of a format of the DMG sensing request frame is provided. The DMG sensing request frame includes a TDD beamforming information field, and the TDD beamforming information field includes a STA ID subfield, where the STA ID subfield is used to indicate an identifier of a SAT.

Optionally, the sensing measurement method provided in the embodiments of the present application is used to modify the STA ID subfield under the TDD beamforming information field in the DMG sensing request frame. As shown in FIG. 16, the STA ID subfield (in bold) under the TDD beamforming information field in the DMG sensing request frame shown in FIG. 8 is modified to obtain the STA ID subfield. The sensing type under the coordinated monostatic can be determined through the value of the STA ID subfield.

Optionally, the STA ID subfield is processed differently based on the sensing type subfield.

Exemplarily, in a case where the sensing type field in the DMG sensing request frame indicates the coordinated monostatic and a value of the station identifier field belongs to a first range, the value of the station identifier field is used to indicate the sequential coordinated monostatic, and the value of the station identifier field is further used to indicate an order in which a station participates in the sequential coordinated monostatic, where the STA ID subfield indicates a station identification character.

Exemplarily, in a schematic diagram of a format of the DMG sensing request frame shown in FIG. 16, a sensing type requested by the frame is determined according to a value of the sensing type shown in Table. 6 above.

Optionally, after the sensing type requested by the frame is determined according to the value of the sensing type, the STA ID subfield is processed differently.

Exemplarily, in a case where the value of the sensing type is 2, it is determined that the sensing type requested by the frame is the multistatic, which indicates that the STA receives an index of the synchronization subfield in the EDMG multistatic sensing PPDU; in a case where the value of the sensing type is 1, it is determined that the sensing type requested by the frame is the coordinated bistatic, and the STA ID subfield represents the identifier of the STA, and also indicates the order in which the STA participates in the sensing measurement; and in a case where the value of the sensing type is 0, it is determined that the sensing type requested by the frame is the coordinated monostatic.

Exemplarily, in a case where the sensing type field in the DMG sensing request frame indicates the coordinated monostatic and the value of the station identifier field belongs to a second range, the value of the station identifier field is used to indicate the parallel coordinated monostatic.

Optionally, in a case where the value of the sensing type is 0 and the value of the STA ID subfield is in a range of 1 to 7, the station identifier field is used to indicate the order in which the station participates in the sequential coordinated monostatic; and in a case where the value of the sensing type is 0 and the value of the STA ID subfield is 0, the station identifier field is used to indicate that the station participates in a parallel coordinated monostatic mode.

Optionally, in a case where the value of the sensing type is 0, the sensing type requested by the frame is the coordinated monostatic. In this case, the mode type of the coordinated monostatic is determined according to a specific value of the STA ID subfield.

Exemplarily, in a case where the value of the sensing type is 0 and the value of the STA ID subfield is in a range of 1 to 7, it indicates that the mode type of the coordinated monostatic is a sequential coordinated mode type. In this case, the STA ID subfield not only represents the identifier of the STA, but also indicates the order in which the STA participates in the sensing measurement.

Exemplarily, in a case where the value of the sensing type is 0 and the value of the STA ID subfield is 0, it indicates that the mode type of the coordinated monostatic is a parallel coordinated mode type.

It is worth noting that specific values of the sensing types above are only illustrative examples, and the values of the sensing types may also adopt other setting schemes, which are not limited in the embodiments of the present application.

In the embodiments of the present application, the STA ID subfield in the sensing request frame is adjusted. Through the value range of the STA ID subfield, not only the mode type of the coordinated monostatic can be determined, but also the STA identifier and the order in which the STA participates in the sensing can be selectively determined based on the mode type of the coordinated monostatic and the value range of the STA ID subfield, so as to facilitate the sensing responder to have more comprehensive understanding of the content information during the sensing measurement process.

### Regarding Problem 2 above:

In the related art, the coordinated monostatic sensing measurement report has two manners: without polling and with polling. However, neither in the DMG sensing measurement setup element nor in the DMG sensing request frame, none of a field may accurately determine a polling status in the coordinated monostatic sensing, so there is a problem of an unclear indication of the polling status.

By adopting the sensing measurement method provided in the embodiments of the present application, in a case of distinguishing the polling status in the coordinated monostatic sensing report, the millimeter-wave DMG sensing measurement setup frame and/or a format of the millimeter-wave DMG sensing measurement setup frame are enabled to carry the first field through being improved.

In an optional embodiment, the sensing initiator transmits a third frame carrying a report poll field, and the sensing responder receives the third frame carrying the report poll field.

Here, the report poll field is used to indicate whether reporting of a sensing measurement result requires polling, and the report poll field is used as a representation form of the first field.

Exemplarily, polling is used to indicate a reporting status of the sensing measurement result, and the report poll field can indicate two situations that: the report poll field indicates that the reporting of the sensing measurement result requires polling, or the report poll field indicates that the reporting of the sensing measurement result does not require polling.

The third frame carries the report poll field, so by reading the third frame, the polling status of the reporting of the sensing measurement result in the third frame can be determined, such as: after reading the third frame, it is determined that the reporting of the sensing measurement result requires polling; or after reading the third frame, it is determined that the reporting of the sensing measurement results does not require polling.

In an optional embodiment, the third frame is at least one of the following frames: a DMG sensing measurement setup request frame, a DMG sensing measurement setup response frame, or a sensing request frame.

Optionally, since the DMG sensing measurement setup request frame and the DMG sensing measurement setup response frame are both types of frames in the sensing measurement setup phase, the DMG sensing measurement setup frame is used to indicate the frames in the sensing measurement setup phase, which include the DMG sensing measurement setup request frame and the DMG sensing measurement setup response frame in the sensing measurement setup phase, thereby making the following description process of character adjustment in the sensing measurement setup phase.

In an optional embodiment, the third frame is implemented as the DMG sensing measurement setup frame (the DMG sensing measurement setup request frame, or the DMG sensing measurement setup response frame), and the report poll field is carried in the sensing measurement setup element of the DMG sensing measurement setup frame (the DMG sensing measurement setup request frame, or the DMG sensing measurement setup response frame).

Exemplarily, as shown in FIG. 6, a schematic diagram of the format of the DMG sensing measurement setup frame (the DMG sensing measurement setup request frame; DMG sensing measurement setup response frame) is provided. The DMG sensing measurement setup frame includes an element ID field, a length field, an element ID extension field, a measurement setup control field, a report type field, an LCI field, a peer orientation field, and an optional subelement field.

Optionally, the sensing measurement method provided in the embodiments of the present application is used to modify a field composition in the DMG sensing measurement setup frame, and add a new field in the DMG sensing measurement setup frame.

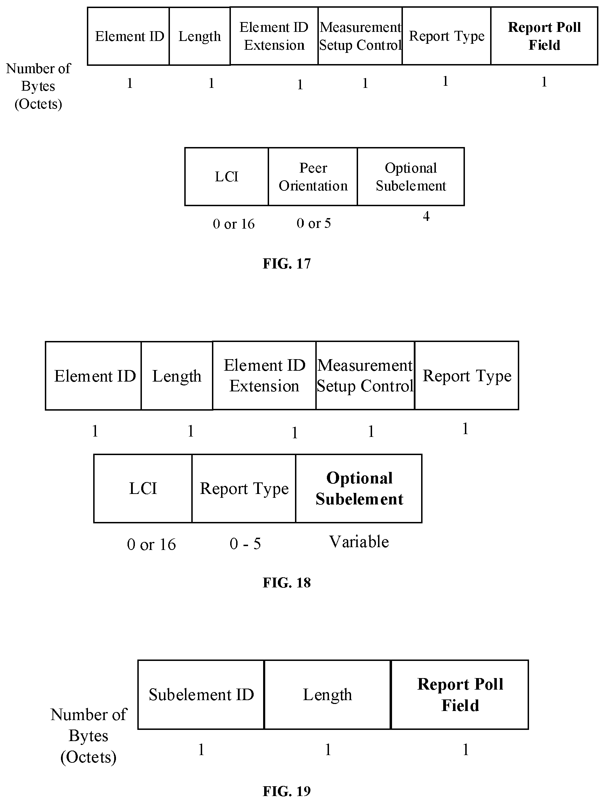

Exemplarily, as shown in FIG. 17, a format of the DMG sensing measurement setup frame shown in FIG. 6 is adjusted, and a report poll field is added after the report type field, where the report poll field is represented in bold, and the report poll field indicates whether the reporting of the sensing measurement result in the DMG sensing measurement setup requires polling. After the format of the DMG sensing measurement setup frame is adjusted, the report poll field is added after the report type field, to enable the format of the DMG sensing measurement setup frame is implemented as follows: the element ID field, the length field, the element ID extension field, the measurement setup control field, the report type field, the report poll field, the LCI field, the peer orientation field, and the optional subelement field.

Here, through a value of the report poll field in the DMG sensing measurement setup frame, it can be determined whether the reporting of the sensing measurement result under the coordinated monostatic requires polling.

Exemplarily, in a case where the value of the report poll field in the DMG sensing measurement setup frame is 1, it indicates that the reporting of the sensing measurement result under the coordinated monostatic requires polling; and in a case where the value of the report poll field in the DMG sensing measurement setup frame is 0, it indicates that the reporting of the sensing measurement result under the coordinated monostatic does not require polling.

Alternatively, in a case where the value of the report poll field in the DMG sensing measurement setup frame is 0, it indicates that the reporting of the sensing measurement result under the coordinated monostatic requires polling; and in a case where the value of the report poll field in the DMG sensing measurement setup frame is 1, it indicates that the reporting of the sensing measurement result under the coordinated monostatic does not require polling.

It is worth noting that specific values of the report poll field above are only illustrative examples; a name of the report poll field is only an illustrative example; and a position of the report poll field in the DMG sensing measurement setup frame is also only an illustrative example, and there may be different situations.

Exemplarily, the position of the report poll field in the DMG sensing measurement setup frame is taken as an example for description. The report poll field is added after the measurement setup control field in the DMG sensing measurement setup frame, or the report poll field is added after the peer orientation field in the DMG sensing measurement setup frame. The above are merely illustrative examples, and the embodiments of the present application are not limited thereto.

In the embodiments of the present application, the format of the DMG sensing measurement setup frame is adjusted, and the report poll field is added, so that according to the value of the report poll field, it is more directly determined whether the reporting of the sensing measurement result under the coordinated monostatic requires polling.

In an optional embodiment, the third frame is implemented as the DMG sensing measurement setup frame (the DMG sensing measurement setup request frame, or the DMG sensing measurement setup response frame), and the report poll field is carried in the optional subelement field of the DMG sensing measurement setup frame (the DMG sensing measurement setup request frame, or the DMG sensing measurement setup response frame).

Exemplarily, as shown in FIG. 6, a schematic diagram of a format of a DMG sensing measurement setup frame is provided. The DMG sensing measurement setup frame includes an element ID field, a length field, an element ID extension field, a measurement setup control field, a report type field, an LCI field, a peer orientation field, and an optional subelement field. As shown in Table 3 above, the optional subelement field includes zero or more subelements, and all subelements include TX beam list, RX beam list and DMG sensing scheduling.

Optionally, the sensing measurement method provided in the embodiments of the present application is used to adjust optional subelements under the optional subelement field in the DMG sensing measurement setup frame, and add a new subelement field in the optional subelement field.

Exemplarily, as shown in FIG. 18, the optional subelements under the optional subelement field in the DMG sensing measurement setup frame shown in FIG. 6 are adjusted, where the optional subelement field in the DMG sensing measurement setup frame is represented in bold; as shown in Table 9 below, a coordinated monostatic specific configuration optional subelement field is added in the optional subelement field, where the coordinated monostatic specific configuration subelement field is represented in bold, and the coordinated monostatic specific configuration optional subelement field is used to carry extended configuration information.

**Table 9**

| Subelement ID | Subelement name | Extendibility |
|---|---|---|
| 1 | TX beam List | Yes |
| 2 | RX beam list | Yes |
| 3 | DMG sensing scheduling | Yes |
| **4** | **Coordinated monostatic specific configuration** | **Yes** |
| 5 - 255 | Reserved | No |

In the coordinated monostatic specific configuration optional subelement field, a specific frame format is shown in FIG. 19. The coordinated monostatic specific configuration optional subelement field includes a subelement ID field, a length field, and a report poll field. A value of the subelement ID field is any integer in a range of 4 to 255, and the value of the subelement ID field being 4 above is only an illustrative example; the length field indicates the number of bytes in the coordinated monostatic specific configuration optional subelement field except the subelement ID field and the length field; and the report poll field indicates whether the reporting of a sensing measurement result in a DMG sensing measurement setup requires polling.

After adjusting a format of the DMG sensing measurement setup frame, the coordinated monostatic specific configuration optional subelement field is added to the optional subelement type. Though taking a value of the report poll field under the coordinated monostatic specific configuration optional subelement field, it can be determined whether the reporting of the sensing measurement result under the coordinated monostatic requires polling.

Exemplarily, in a case where the value of the report poll field under the coordinated monostatic specific configuration optional subelement field is 1, it indicates that the reporting of the sensing measurement result under the coordinated monostatic requires polling; and in a case where the value of the report poll field under the coordinated monostatic specific configuration optional subelement field is 0, it indicates that the reporting of the sensing measurement result under the coordinated monostatic does not require polling.

Alternatively, in a case where the value of the report poll field under the coordinated monostatic specific configuration optional subelement field is 0, it indicates that the reporting of the sensing measurement result under the coordinated monostatic requires polling; and in a case where the value of the report poll field under the coordinated monostatic specific configuration optional subelement field is 1, it indicates that the reporting of the sensing measurement result under the coordinated monostatic does not require polling.

It is worth noting that specific values of the coordinated monostatic specific configuration optional subelement field above are only illustrative examples, and the value of the coordinated monostatic specific configuration optional subelement field may also adopt other setting schemes, which is not limited in the embodiments of the present application. In addition, names of the coordinated monostatic specific configuration and the coordinated monostatic specific configuration optional subelement field above are only illustrative examples and are not limited to the embodiments of the present application.

In the embodiments of the present application, the format of the DMG sensing measurement setup frame is adjusted, an optional subelement under an existing optional subelement field is adjusted, and a report poll field is added in the optional subelements, so that according to the value of the report poll field, it is more directly determined whether the reporting of the sensing measurement result under the coordinated monostatic requires polling.

In an optional embodiment, the third frame is implemented as a DMG sensing request frame.

Optionally, the report poll field is carried in a TDD beam information field of the DMG sensing request frame.

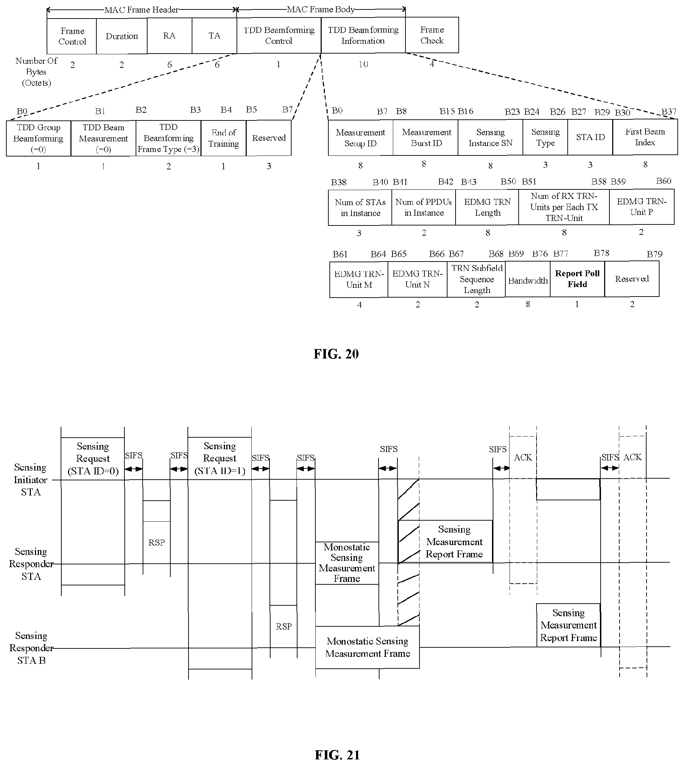

Exemplarily, as shown in FIG. 8, a schematic diagram of a format of a DMG sensing request frame is provided. The DMG sensing request frame includes a TDD beamforming information field, and the TDD beamforming information field is adjusted, so that the report poll field is carried in the TDD beam information field of the DMG sensing request frame. As shown in FIG. 20, a new report poll field (in bold) is added after a bandwidth subfield under the TDD beamforming information field in the DMG sensing request frame shown in FIG. 8, so as to obtain the TDD beamforming information field. That is, the TDD beamforming information field includes the report poll field.

Here, the report poll field indicates whether the reporting of a sensing measurement result in a DMG sensing measurement setup requires polling.

Exemplarily, in a case where a value of the report poll field under the TDD beamforming information field is 1, it indicates that the reporting of the sensing measurement result under the coordinated monostatic requires polling; and in a case where the value of the report poll field under the TDD beamforming information field is 0, it indicates that the reporting of the sensing measurement result under the coordinated monostatic does not require polling.

Alternatively, in a case where the value of the report poll field under the TDD beamforming information field is 0, it indicates that the reporting of the sensing measurement result under the coordinated monostatic requires polling; in a case where the value of the report poll field under the TDD beamforming information field is 1, it indicates that the reporting of the sensing measurement result under the coordinated monostatic does not require polling.

In the embodiments of the present application, the format of the DMG sensing request frame is adjusted, and the report poll field is added after the bandwidth subfield under the TDD beamforming information field, so that according to the value of the report poll field, it is more directly determined whether the reporting of the sensing measurement result under the coordinated monostatic requires polling.

### Regarding Problem 3 above:

In the related art, it is impossible to accurately indicate the length of the monostatic PPDU in the coordinated monostatic sensing under a parallel mode. Generally speaking, a format and length of a monostatic PPDU are not clearly specified. In general, it is only required that a receiving address in a PSDU carried by the monostatic PPDU is equal to a transmitting address in the PSDU carried by the monostatic PPDU. Therefore, under the parallel mode of a coordinated monostatic sensing type, interference problems as shown in FIG. 21 sometimes occur.

As shown in FIG. 21, a flowchart of a parallel mode of coordinated monostatic sensing measurement provided in an exemplary embodiment of the present application is provided. As shown in FIG. 21, the flow involves one sensing initiator (STA) and two sensing responders (a station A and a station B), and the flow includes the following processes (from left to right) that:
(1) the sensing initiator transmits a DMG sensing request frame to the station A, where "Number of STAs in Instance" is set to 2, "Number of PPDUs" is set to 1, and "STA ID" is set to 0;
(2) after SIFS time, the station A replies with the DMG sensing response frame to the sensing initiator;
(3) after SIFS time, the sensing initiator transmits the DMG sensing request frame to the station B, where the "Number of STAs in Instance" is set to 2, the "Number of PPDUs" is set to 1, and the "STA ID" is set to 1;
(4) after SIFS time, the station B replies with the DMG sensing response frame to the sensing initiator;
(5) after the SIFS time, the station A and the station B each simultaneously transmit and simultaneously receive a monostatic sensing measurement frame to sense the environment;
(6) after SIFS time, the station A transmits a DMG sensing measurement report frame to the sensing initiator to report a sensing measurement result;
(7) after SIFS time, the sensing initiator replies with an ACK frame to the station A;
(8) after the SIFS time, the sensing initiator transmits a DMG sensing report poll frame to the station B, to trigger the station B to report the sensing measurement result;
(9) after the SIFS time, the station B transmits the DMG sensing measurement report frame to the sensing initiator, to report the sensing measurement result; and
(10) after SIFS time, the sensing initiator replies with an ACK frame to the station B.

It should be noted that the above (7) and (10) are optional steps. In the above example, there are only two responders. If there are more responders, the above method may be used to continue to trigger subsequent responders to transmit DMG sensing measurement report frames.

As shown in FIG. 21, in the above process, in a case where a length of a monostatic sensing measurement frame (the monostatic PPDU) transmitted and received by the station B itself is greater than a length of a monostatic sensing measurement frame transmitted and received by the station A itself, the monostatic sensing measurement frame transmitted and received by the station B itself overlaps with the DMG sensing measurement report frame transmitted by the station A, thereby causing an interference between the station A and the station B.

By adopting the sensing measurement method provided in the embodiments of the present application, in a case where the maximum length of the monostatic PPDU is limited, the format of the millimeter-wave DMG sensing measurement setup frame is improved to enable a transmitted frame to carry the first field.

In an optional embodiment, the sensing initiator transmits a fourth frame carrying a maximum duration field of a monostatic PPDU, and the sensing responder receives the fourth frame carrying the maximum duration field of the monostatic PPDU.

Here, the maximum duration field of the monostatic PPDU is used to indicate a maximum duration of the monostatic PPDU used by the sensing responder, and the maximum duration field of the monostatic PPDU is used as a representation of the first field. The fourth frame carries the maximum duration field of the monostatic PPDU, so by reading the fourth frame, the maximum duration field of the monostatic PPDU in the fourth frame can be determined.

In an optional embodiment, the fourth frame is implemented as a DMG sensing measurement setup frame.

Exemplarily, in a case where the maximum duration field of the monostatic PPDU is set in the DMG sensing measurement setup frame, the maximum duration field of the monostatic PPDU is carried in an optional subelement field of the DMG sensing measurement setup frame. According to a different optional subelement field selected, the setting of carrying the maximum duration field of the monostatic PPDU in the optional subelement field of the DMG sensing measurement setup frame is explained.

Optionally, since the DMG sensing measurement setup request frame and the DMG sensing measurement setup response frame are both types of frames in the sensing measurement setup phase, the DMG sensing measurement setup frame is used to indicate the frames in the sensing measurement setup phase, which include the DMG sensing measurement setup request frame and the DMG sensing measurement setup response frame in the sensing measurement setup phase, thereby making the following description process of character adjustment in the sensing measurement setup phase.

In an optional embodiment, the optional subelement field is a second coordinated monostatic specific configuration subelement.

Exemplarily, as shown in FIG. 6, a schematic diagram of a format of a DMG sensing measurement setup frame (the DMG sensing measurement setup request frame, or the DMG sensing measurement setup response frame) is provided. The DMG sensing measurement setup frame includes an element ID field, a length field, an element ID extension field, a measurement setup control field, a report type field, an LCI field, a peer orientation field, and an optional subelement field. As shown in Table 3 above, the optional subelement field includes zero or more subelements, and all subelements include TX beam list, RX beam list and DMG sensing scheduling.

Optionally, the sensing measurement method provided in the embodiments of the present application is used to adjust optional subelements under the optional subelement field in the DMG sensing measurement setup frame, and add a new subelement field in the optional subelement field.

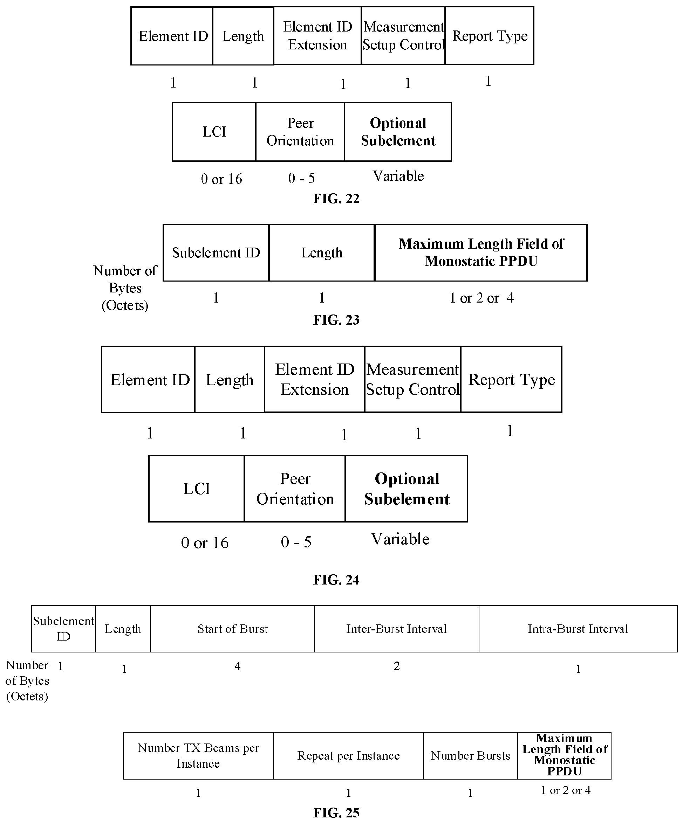

Exemplarily, as shown in FIG. 22, the optional subelements under the optional subelement field in the DMG sensing measurement setup frame shown in FIG. 6 are adjusted, where the optional subelement field in the DMG sensing measurement setup frame is represented in bold; as shown in Table 10 below, a coordinated monostatic specific configuration optional subelement field is added in the optional subelement field, where the coordinated monostatic specific configuration subelement field is represented in bold, and the coordinated monostatic specific configuration optional subelement field is used to carry extended configuration information.

**Table 10**

| Subelement ID | Subelement name | Extendibility |
|---|---|---|
| 1 | TX beam List | Yes |
| 2 | RX beam list | Yes |
| 3 | DMG sensing scheduling | Yes |
| **4** | **Coordinated monostatic specific configuration** | **Yes** |
| 5 - 255 | Reserved | No |

In the coordinated monostatic specific configuration optional subelement field, a specific frame format is shown in FIG. 23. The coordinated monostatic specific configuration optional subelement field includes a subelement ID field, a length field, and a maximum duration field of the monostatic PPDU. A value of the subelement ID field is any integer in a range of 4 to 255, and the value of the above subelement ID field being 4 is only an illustrative example; the length field indicates the number of bytes in the coordinated monostatic specific configuration optional subelement field except the subelement ID field and the length field; and the maximum duration field of the monostatic PPDU indicates the maximum duration of the monostatic PPDU used by the sensing responder STA in a DMG sensing measurement setup, and a unit of the maximum duration field of the monostatic PPDU is a unit of time adopted by a timing synchronization function timer (TSF), i.e., microseconds (us).

Here, each STA in a same DMG sensing measurement setup frame should be configured with a same maximum duration field of the monostatic PPDU. Optionally, the process of configuring the maximum duration field of the monostatic PPDU above is applicable to a sensing measurement instance process that occurs during a service period (SP).

In the embodiments of the present application, the format of the DMG sensing measurement setup frame is adjusted, the optional subelements under the optional subelement field are adjusted, a new subelement field is added in the optional subelement field, and the subelement field includes the maximum duration field of the monostatic PPDU, thereby more directly determining the maximum duration of the monostatic PPDU according to the value of the maximum duration field of the monostatic PPDU.

In an optional embodiment, the optional subelement field is a sensing measurement scheduling subelement.

Exemplarily, as shown in FIG. 6, a schematic diagram of a format of a DMG sensing measurement setup frame (the DMG sensing measurement setup request frame, or the DMG sensing measurement setup response frame) is provided. The DMG sensing measurement setup frame includes an element ID field, a length field, an element ID extension field, a measurement setup control field, a report type field, an LCI field, a peer orientation field, and an optional subelement field. As shown in Table 3 above, the optional subelement field includes zero or more subelements, and all subelements include TX beam list, RX beam list and DMG sensing scheduling.

Optionally, the sensing measurement method provided in the embodiments of the present application is used to adjust the optional subelements under the optional subelement field in the DMG sensing measurement setup frame. Exemplarily, the sensing measurement scheduling subelement (the DMG sensing scheduling) in the optional subelement field is adjusted. The sensing measurement scheduling subelement is used for the configuration information related to a sensing measurement instance and a sensing measurement burst.

Exemplarily, as shown in FIG. 24, the optional subelements under the optional subelement field in the DMG sensing measurement setup frame shown in FIG. 6 are adjusted, where the optional subelement field in the DMG sensing measurement setup frame is represented in bold; as shown in Table 11 below, in the optional subelement field, the sensing measurement scheduling subelement is adjusted, and a new field is added in the sensing measurement scheduling subelement, where the sensing measurement scheduling subelement is represented in bold.

**Table 11**

| Subelement ID | Subelement name | Extendibility |
|---|---|---|
| 1 | TX beam List | Yes |
| 2 | RX beam list | Yes |
| **3** | **DMG sensing scheduling** | **Yes** |
| 4 - 255 | Reserved | No |

The sensing measurement scheduling subelement further carries at least one of the following fields: a start time of the sensing measurement burst; a time interval between adjacent sensing measurement bursts; a time interval between adjacent sensing measurement instances in a sensing measurement burst; the number of receive beams used in a sensing measurement instance; the number of repetitions required in a sensing measurement instance; or the number of repetitions of the sensing measurement burst.

Exemplarily, as shown in FIG. 25, a condition of a frame format of the sensing measurement scheduling subelement, i.e., a condition of the field carried in the sensing measurement scheduling subelement, is provided.

The sensing measurement scheduling subelement includes fields: a subelement ID field, a length field, a start time of the sensing measurement burst (Start of Burst), a time interval between adjacent sensing measurement bursts (Inter-Burst Interval), a time interval between adjacent sensing measurement instances in a sensing measurement burst (Intra-Burst Interval), the number of receive beams used in a sensing measurement instance (Number TX Beams per Instance), the number of repetitions required in a sensing measurement instance (Repeat per Instance), the number of repetitions of the sensing measurement burst (Number Bursts), and a maximum duration field of the monostatic PPDU.

A value of the subelement ID field is any integer in a range of 4 to 255, and the value of the subelement ID field being 4 above is only an illustrative example.

The length field indicates the number of bytes in the sensing measurement scheduling subelement except the subelement ID field and the length field.

The field of the start time of the sensing measurement burst is used to indicate a start time of a burst, where the time is of a unit of TSF time - us.

The field of the time interval between adjacent sensing measurement bursts is used to indicate the time interval between adjacent bursts, with a unit being the unit of TSF time - us.

The field of the time interval between adjacent sensing measurement instances in a sensing measurement burst is used to indicate the time interval between adjacent instances in a burst, with a unit being the unit of TSF time - us.

The field of the number of receive beams used in a sensing measurement instance is used to indicate the number of TX beams to be used in an instance.

The field of the number of repetitions required in a sensing measurement instance is used to indicate the number of repetitions required in an instance.

The field of the number of repetitions of the sensing measurement burst is used to indicate the number of burst repetitions, taking a value being 0 indicating that the burst is repeated until the sensing measurement setup is terminated.

The maximum duration field of the monostatic PPDU is used to indicate the maximum duration of the monostatic PPDU used by the sensing responder STA in the DMG sensing measurement setup, and the unit of the maximum duration field of the monostatic PPDU is the unit of TSF time. Each STA in the same DMG sensing measurement setup should be configured with the same maximum duration of the monostatic PPDU. Optionally, the above process of configuring the maximum duration field of the monostatic PPDU is applicable to the sensing measurement instance process that occurs during a service period (SP).

In the embodiments of the present application, in a case where the format of the DMG sensing measurement setup frame is adjusted, existing sensing measurement scheduling subelements are adjusted, and the maximum duration field of the monostatic PPDU is added to the sensing measurement scheduling subelements, so that the maximum duration of the monostatic PPDU may be determined more directly based on the value of the maximum duration field of the monostatic PPDU.

Exemplarily, based on specific information carried by the first field, in a case where the sensing initiator transmits a frame carrying the first field to the sensing responder, different information contents may be conveyed to the sensing responder, so that different types of first fields may achieve a purpose of conveying different pieces of information to the sensing responder more quickly and directly.

The above specific fields such as the sensing type field, the station identifier field, the report poll field, the maximum duration field of the monostatic PPDU can each be implemented as a first field. The frame transmitted by the sensing initiator to the sensing responder includes at least one of the above multiple types of first fields. According to different first fields, the sensing initiator can convey at least one information content to the sensing responder. In addition, the positions of specific fields such as the measurement type field, the station identifier field, the report poll field, and the maximum duration field of the monostatic PPDU can also be arbitrarily combined.

It is worth noting that the first frame, second frame, third frame, and fourth frame above do not represent an order of frames. In a case where a frame carries the above multiple fields, any two frames or at least two frames of the first frame, second frame, third frame, and fourth frame may be implemented as the same frame. For example: in a case where a frame carries the sensing type field and the report poll field, the frame belongs to the first frame and also belongs to the second frame, that is, the first frame and the second frame belong to the same frame; alternatively, in a case where a frame carries the sensing type field and the maximum duration field of the monostatic PPDU, the frame belongs to the first frame and also belongs to the third frame, that is, the first frame and the third frame belong to the same frame. The above is only an illustrative example, and the embodiments of the present application are not limited to this.

It should be noted that the above embodiments can be freely combined or split into new embodiments, and the present application does not limit this.

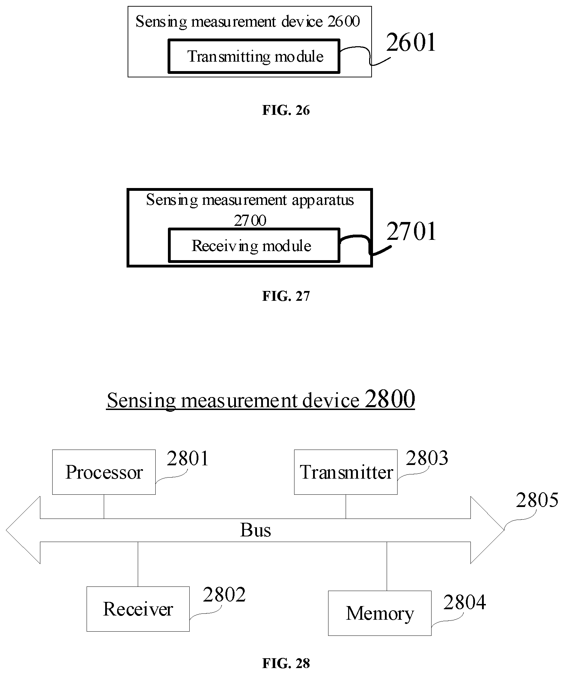

FIG. 26 is a block diagram of a sensing measurement apparatus 2600 provided by an exemplary embodiment of the present application. As shown in FIG. 26, the apparatus is located in a sensing measurement device, and the apparatus includes:
a transmitting module 2601, configured to transmit a frame carrying a first field;
where the first field is a specific field of sequential coordinated monostatic or parallel coordinated monostatic, and/or the first field has a specific meaning in the sequential coordinated monostatic or the parallel coordinated monostatic.

In an optional embodiment, the transmitting module 2601 is further configured to transmit the first frame carrying a sensing type field, where the sensing type field is used to indicate that a sensing type is the sequential coordinated monostatic or the parallel coordinated monostatic.

The first frame is at least one of the following frames:
a millimeter-wave DMG sensing measurement setup request frame;
a millimeter-wave DMG sensing measurement setup response frame; or
a millimeter-wave DMG sensing request frame.

In an optional embodiment, the transmitting module 2601 is further configured to transmit a second frame carrying a station identifier field, where the station identifier field is used to indicate an order in which a station participates in the sequential coordinated monostatic.

The second frame is a DMG sensing request frame.

In an optional embodiment, in a case where a sensing type field in the DMG sensing request frame indicates the sequential coordinated monostatic, the station identifier field is used to indicate the order in which the station participates in the sequential coordinated monostatic; or
in a case where a sensing type field in the DMG sensing request frame indicates coordinated monostatic and a value of the station identifier field belongs to a first range, the value of the station identifier field is used to indicate the sequential coordinated monostatic and the value of the station identifier field is further used to indicate the order in which the station participates in the sequential coordinated monostatic.

In an optional embodiment, in a case where the sensing type field in the DMG sensing request frame indicates the coordinated monostatic and the value of the station identifier field belongs to a second range, the value of the station identifier field is used to indicate the parallel coordinated monostatic.

In an optional embodiment, the transmitting module 2601 is further configured to transmit a third frame carrying a report poll field, where the report poll field is used to indicate whether reporting of the sensing measurement result requires polling.

The third frame is at least one of the following frames:
a millimeter-wave DMG sensing measurement setup request frame;
a millimeter-wave DMG sensing measurement setup response frame; or
a millimeter-wave DMG sensing request frame.

In an optional embodiment,
the report poll field is carried in a sensing measurement setup element of the DMG sensing measurement setup request frame; or
the report poll field is carried in a sensing measurement setup element of the DMG sensing measurement setup response frame; or
the report poll field is carried in an optional subelement field of the DMG sensing measurement setup request frame; or
the report poll field is carried in an optional subelement field of the DMG sensing measurement setup response frame; or
the report poll field is carried in a time division duplexing (TDD) beam information field of the DMG sensing request frame.

In an optional embodiment, the optional subelement field is a first coordinated monostatic specific configuration subelement.

In an optional embodiment, the transmitting module 2601 is further configured to transmit a fourth frame carrying a maximum duration field of a monostatic PPDU, and the maximum duration field of the monostatic PPDU is used to indicate the maximum duration of the monostatic PPDU used by a sensing responder.

The fourth frame is at least one of the following frames:
a DMG sensing measurement setup request frame; or
a DMG sensing measurement setup response frame.

The maximum duration field of the monostatic PPDU is carried in an optional subelement field of a DMG sensing measurement setup frame.

In an optional embodiment, the optional subelement field is a second coordinated monostatic specific configuration subelement; or
the optional subelement field is a sensing measurement scheduling subelement.

In an optional embodiment, the sensing measurement scheduling subelement further carries at least one of the following fields:
a start time of a sensing measurement burst;
a time interval between adjacent sensing measurement bursts;
a time interval between adjacent sensing measurement instances in a sensing measurement burst;
the number of receive beams used in a sensing measurement instance;
the number of repetitions required in a sensing measurement instance; or
the number of repetitions of a sense measurement burst.

FIG. 27 is a block diagram of a sensing measurement apparatus 2700 provided by an exemplary embodiment of the present application. As shown in FIG. 27, the apparatus is located in a sensing measurement device, and the apparatus includes:
a receiving module 2701, configured to receive a frame carrying a first field;
where the first field is a specific field of sequential coordinated monostatic or parallel coordinated monostatic, and/or the first field has a specific meaning in the sequential coordinated monostatic or the parallel coordinated monostatic.

In an optional embodiment, the receiving module 2701 is configured to receive a first frame carrying a sensing type field, where the sensing type field is used to indicate that a sensing type is the sequential coordinated monostatic or the parallel coordinated monostatic.

The first frame is at least one of the following frames:
a millimeter-wave DMG sensing measurement setup request frame;
a millimeter-wave DMG sensing measurement setup response frame; or
a millimeter-wave DMG sensing request frame.

In an optional embodiment, the receiving module 2701 is further configured to receive a second frame carrying a station identifier field, where the station identifier field is used to indicate an order in which a station participates in the sequential coordinated monostatic.

The second frame is a DMG sensing request frame.

In an optional embodiment, in a case where a sensing type field in the DMG sensing request frame indicates the sequential coordinated monostatic, the station identifier field is used to indicate the order in which the station participates in the sequential coordinated monostatic; or
in a case where a sensing type field in the DMG sensing request frame indicates coordinated monostatic and a current sensing measurement is the sequential coordinated monostatic, and a value of the station identifier field belongs to a first range, the value of the station identifier field is used to indicate the sequential coordinated monostatic and the value of the station identifier field is further used to indicate the order in which the station participates in the sequential coordinated monostatic.

In an optional embodiment, the receiving module 2701 is further configured such that, in a case where the sensing type field in the DMG sensing request frame indicates the coordinated monostatic and the value of the station identifier field belongs to a second range, the station identifier field is used to indicate the parallel coordinated monostatic.

In an optional embodiment, the receiving module 2701 is further configured to receive a third frame carrying a report poll field, where the report poll field is used to indicate whether reporting of a sensing measurement result requires polling.

The third frame is at least one of the following frames:
a millimeter-wave DMG sensing measurement setup request frame; or
a millimeter-wave DMG sensing measurement request response frame.

In an optional embodiment, the report poll field is carried in a sensing measurement setup element of the DMG sensing measurement setup request frame; or the report poll field is carried in a sensing measurement setup element of the DMG sensing measurement setup response frame; or the report poll field is carried in an optional subelement field of the DMG sensing measurement setup frame; or the report poll field is carried in an optional subelement field of the DMG sensing measurement setup response frame; or the report poll field is carried in a TDD beam information field of the DMG sensing request frame.

The optional subelement field is a first coordinated monostatic specific configuration subelement.

In an optional embodiment, the receiving module 2701 is further configured to receive a fourth frame carrying a maximum duration field of a monostatic PPDU, where the maximum duration field of the monostatic PPDU is used to indicate the maximum duration of the monostatic PPDU used by a sensing responder.

The fourth frame is at least one of the following frames: a DMG sensing measurement setup request frame, or a DMG sensing measurement setup response frame.

The maximum duration field of the monostatic PPDU is carried in an optional subelement field of a DMG sensing measurement setup frame.

In an optional embodiment, the optional subelement field is a second coordinated monostatic specific configuration subelement; or
the optional subelement field is a sensing measurement scheduling subelement.

In an optional embodiment, the sensing measurement scheduling subelement further carries at least one of the following fields:
a start time of a sensing measurement burst;
a time interval between adjacent sensing measurement bursts;
a time interval between adjacent sensing measurement instances in a sensing measurement burst;
the number of receive beams used in a sensing measurement instance;
the number of repetitions required in a sensing measurement instance; or
the number of repetitions of a sense measurement burst.

One point to be noted is that the apparatus provided by the above embodiments is only illustrated by way of example with the division of various functional modules described above when implementing the functions thereof, and in actual application, the functions described above may be assigned to be accomplished by different functional modules according to the actual needs, i.e., the content structure of the apparatus is divided into different functional modules for accomplishing all or some of the functions described above.

Regarding the apparatus in the above embodiments, specific manners in which each module performs operations have been described in detail in the embodiments of the method, and will not be elaborated here.

FIG. 28 is a structural diagram of a sensing measurement device (a sensing initiator and/or a sensing responder) provided by an exemplary embodiment of the present application. The sensing measurement device 2800 includes: a processor 2801, a receiver 2802, a transmitter 2803, a memory 2804, and a bus 2805.

The processor 2801 includes one or more than one processing cores. The processor 2801 executes various functional applications and information processing by running software programs and modules.

The receiver 2802 and the transmitter 2803 may be implemented as a communication component, which may be a communication chip.

The memory 2804 is connected to the processor 2801 through the bus 2805. The memory 2804 may be used to store at least one instruction, and the processor 2801 may be used to execute the at least one instruction to implement each step in the method embodiments above.

In addition, the memory 2804 can be implemented by any type of volatile (transitory) or non-volatile (non-transitory) storage device or a combination thereof. The volatile or non-volatile storage device includes but is not limited to: a magnetic disk or an optical disk, an electrically erasable programmable read-only memory (EEPROM), an erasable programmable read-only memory (EPROM), a static random-access memory (SRAM), a read-only memory (ROM), a magnetic storage device, a flash memory, or a programmable read-only memory (PROM).

The embodiments of the present application further provide a computer-readable storage medium, where the computer-readable storage medium has stored therein a computer program. The computer program is used to be executed by a sensing measurement device, to implement the coordinated sensing measurement method of the sensing measurement device above (the sensing initiator and/or the sensing responder).

Optionally, the computer-readable storage medium may include: a read-only memory (ROM), a random-access memory (RAM), a solid-state drive (SSD), or an optical disk, where the random access memories may include a resistance random access memory (ReRAM) and a dynamic random access memory (DRAM).

The embodiments of the present application further provide a chip, which includes a programmable logic circuit and/or program instructions. A sensing measurement device equipped with the chip, when operating, is used to implement the sensing measurement method of the sensing measurement device above.

The embodiments of the present application further provide a computer program product or a computer program, where the computer program product or the computer program includes computer instructions. The computer instructions are stored in a computer-readable storage medium, and a sensing measurement device reads the computer instructions from the computer-readable storage medium and executes the computer instructions, to implement the sensing measurement method of the sensing measurement device above.

Those of ordinary skill in the art will appreciate that in one or more of the above examples, the functions described in the embodiments of the present application can be implemented by hardware, software, firmware or any combination thereof. When implemented using software, the functions may be stored in or transmitted as one or more instructions or codes on a computer-readable medium. The computer-readable media include a computer storage medium and a communication medium, where the communication medium includes any medium that allows the transfer of a computer program from one place to another, and the storage medium may be any available media accessible by a general purpose or special purpose computer.

The description above is only optional embodiments of the present application and is not intended to limit the present application. Any modifications, equivalent substitutions, improvements, or the like made within the spirit and principles of the present application shall be included in the protection scope of the present application.

## Claims

1. A sensing measurement method, applied to a sensing measurement device and comprising:
transmitting a frame carrying a first field;
wherein the first field is a specific field of sequential coordinated monostatic or parallel coordinated monostatic, and/or the first field has a specific meaning in the sequential coordinated monostatic or the parallel coordinated monostatic.

2. The method according to claim 1, wherein transmitting the frame carrying the first field comprises:
transmitting a first frame carrying a sensing type field, the sensing type field being used to indicate that a sensing type is the sequential coordinated monostatic or the parallel coordinated monostatic.

3. The method according to claim 2, wherein the first frame is at least one of following frames:
a millimeter-wave directional multi-gigabit (DMG) sensing measurement setup request frame;
a millimeter-wave DMG sensing measurement setup response frame; or
a millimeter-wave DMG sensing request frame.

4. The method according to claim 1, wherein transmitting the frame carrying the first field comprises:
transmitting a second frame carrying a station identifier field, the station identifier field being used to indicate an order in which a station participates in the sequential coordinated monostatic.

5. The method according to claim 4, wherein the second frame is a DMG sensing request frame;
in a case where a sensing type field in the DMG sensing request frame indicates the sequential coordinated monostatic, the station identifier field is used to indicate the order in which the station participates in the sequential coordinated monostatic; or
in a case where the sensing type field in the DMG sensing request frame indicates coordinated monostatic and a value of the station identifier field belongs to a first range, the value of the station identifier field is used to indicate the sequential coordinated monostatic and the value of the station identifier field is further used to indicate the order in which the station participates in the sequential coordinated monostatic.

6. The method according to claim 5, further comprising:
in a case where the sensing type field in the DMG sensing request frame indicates the coordinated monostatic and the value of the station identifier field belongs to a second range, the value of the station identifier field being used to indicate the parallel coordinated monostatic.

7. The method according to claim 1, wherein transmitting the frame carrying the first field comprises:
transmitting a third frame carrying a report poll field, the report poll field being used to indicate whether reporting of a sensing measurement result requires polling.

8. The method according to claim 7, wherein the third frame is at least one of following frames:
a millimeter-wave DMG sensing measurement setup request frame;
a millimeter-wave DMG sensing measurement setup response frame; or
a millimeter-wave DMG sensing request frame.

9. The method according to claim 8, wherein
the report poll field is carried in a sensing measurement setup element of the DMG sensing measurement setup request frame; or
the report poll field is carried in a sensing measurement setup element of the DMG sensing measurement setup response frame; or
the report poll field is carried in an optional subelement field of the DMG sensing measurement setup request frame; or
the report poll field is carried in an optional subelement field of the DMG sensing measurement setup response frame; or
the report poll field is carried in a time division duplexing (TDD) beam information field of the DMG sensing request frame.

10. The method according to claim 9, wherein the optional subelement field is a first coordinated monostatic specific configuration subelement.

11. The method according to claim 1, wherein transmitting the frame carrying the first field comprises:
transmitting a fourth frame carrying a maximum duration field of a monostatic physical layer protocol data unit (PPDU), the maximum duration field of the monostatic PPDU being used to indicate a maximum duration of the monostatic PPDU used by a sensing responder.

12. The method according to claim 11, wherein the fourth frame is at least one of following frames:
a DMG sensing measurement setup request frame; or
a DMG sensing measurement setup response frame.

13. The method according to claim 11, wherein the maximum duration field of the monostatic PPDU is carried in an optional subelement field of a DMG sensing measurement setup frame.

14. The method according to claim 13, wherein
the optional subelement field is a second coordinated monostatic specific configuration subelement; or
the optional subelement field is a sensing measurement scheduling subelement.

15. The method according to claim 14, wherein the sensing measurement scheduling subelement further carries at least one of following fields:
a start time of a sensing measurement burst;
a time interval between adjacent sensing measurement bursts;
a time interval between adjacent sensing measurement instances in a sensing measurement burst;
a number of receive beams used in a sensing measurement instance;
a number of repetitions required in a sensing measurement instance; or
a number of repetitions of a sense measurement burst.

16. A sensing measurement method, applied to a sensing measurement device and comprising:
receiving a frame carrying a first field;
wherein the first field is a specific field of sequential coordinated monostatic or parallel coordinated monostatic, and/or the first field has a specific meaning in the sequential coordinated monostatic or the parallel coordinated monostatic.

17. The method according to claim 16, wherein receiving the frame carrying the first field comprises:
receiving a first frame carrying a sensing type field, the sensing type field being used to indicate that a sensing type is the sequential coordinated monostatic or the parallel coordinated monostatic.

18. The method according to claim 17, wherein the first frame is at least one of following frames:
a millimeter-wave DMG sensing measurement setup request frame;
a millimeter-wave DMG sensing measurement setup response frame; or
a millimeter-wave DMG sensing request frame.

19. The method according to claim 16, wherein receiving the frame carrying the first field comprises:
receiving a second frame carrying a station identifier field, the station identifier field being used to indicate an order in which a station participates in the sequential coordinated monostatic.

20. The method according to claim 19, wherein the second frame is a DMG sensing request frame;
in a case where a sensing type field in the DMG sensing request frame indicates the sequential coordinated monostatic, the station identifier field is used to indicate the order in which the station participates in the sequential coordinated monostatic; or
in a case where the sensing type field in the DMG sensing request frame indicates coordinated monostatic and a current sensing measurement is the sequential coordinated monostatic, and a value of the station identifier field belongs to a first range, the value of the station identifier field is used to indicate the sequential coordinated monostatic and the value of the station identifier field is further used to indicate the order in which the station participates in the sequential coordinated monostatic.

21. The method according to claim 20, further comprising:
in a case where the sensing type field in the DMG sensing request frame indicates the coordinated monostatic and the value of the station identifier field belongs to a second range, the value of the station identifier field being used to indicate the parallel coordinated monostatic.

22. The method according to claim 16, wherein receiving the frame carrying the first field comprises:
receiving a third frame carrying a report poll field, the report poll field being used to indicate whether reporting of a sensing measurement result requires polling.

23. The method according to claim 22, wherein the third frame is at least one of following frames:
a millimeter-wave DMG sensing measurement setup request frame; or
a millimeter-wave DMG sensing measurement request response frame.

24. The method according to claim 23, wherein
the report poll field is carried in a sensing measurement setup element of the DMG sensing measurement setup request frame; or
the report poll field is carried in a sensing measurement setup element of the DMG sensing measurement setup response frame; or
the report poll field is carried in an optional subelement field of the DMG sensing measurement setup frame; or
the report poll field is carried in an optional subelement field of the DMG sensing measurement setup response frame; or
the report poll field is carried in a TDD beam information field of the DMG sensing request frame.

25. The method according to claim 24, wherein the optional subelement field is a first coordinated monostatic specific configuration subelement.

26. The method according to claim 16, wherein receiving the frame carrying the first field comprises:
receiving a fourth frame carrying a maximum duration field of a monostatic PPDU, the maximum duration field of the monostatic PPDU being used to indicate a maximum duration of the monostatic PPDU used by a sensing responder.

27. The method according to claim 26, wherein the fourth frame is at least one of the following frames:
a DMG sensing measurement setup request frame; or
a DMG sensing measurement setup response frame.

28. The method according to claim 26, wherein the maximum duration field of the monostatic PPDU is carried in an optional subelement field of a DMG sensing measurement setup frame.

29. The method according to claim 28, wherein
the optional subelement field is a second coordinated monostatic specific configuration subelement; or
the optional subelement field is a sensing measurement scheduling subelement.

30. The method according to claim 29, wherein the sensing measurement scheduling subelement further carries at least one of following fields:
a start time of a sensing measurement burst;
a time interval between adjacent sensing measurement bursts;
a time interval between adjacent sensing measurement instances in a sensing measurement burst;
a number of receive beams used in a sensing measurement instance;
a number of repetitions required in a sensing measurement instance; or
a number of repetitions of a sense measurement burst.

31. A sensing measurement apparatus, applied to a sensing measurement device and comprising:
a transmitting module, configured to transmit a frame carrying a first field;
wherein the first field is a specific field of sequential coordinated monostatic or parallel coordinated monostatic, and/or the first field has a specific meaning in the sequential coordinated monostatic or the parallel coordinated monostatic.

32. A sensing measurement apparatus, applied to a sensing measurement device and comprising:
a receiving module, configured to receive a frame carrying a first field;
wherein the first field is a specific field of sequential coordinated monostatic or parallel coordinated monostatic, and/or the first field has a specific meaning in the sequential coordinated monostatic or the parallel coordinated monostatic.

33. A sensing initiating device, comprising:
a processor;
a transceiver connected to the processor; and
a memory for storing executable instructions of the processor;
wherein the processor is configured to load the executable instructions, to enable the sensing initiating device to implement the sensing measurement method as claimed in any one of claims 1 to 15.

34. A sensing responding device, comprising:
a processor;
a transceiver connected to the processor; and
a memory for storing executable instructions of the processor;
wherein the processor is configured to load the executable instructions, to enable the sensing responding device to implement the sensing measurement method as claimed in any one of claims 16 to 30.

35. A computer-readable storage medium, having stored therein a computer program, the computer program being used to be executed by a sensing measurement device, to implement the sensing measurement method claimed in any one of claims 1 to 30.

36. A chip, comprising a programmable logic circuit and/or program instructions, wherein a sensing measurement device equipped with the chip, when operating, to implement the sensing measurement method claimed in any one of claims 1 to 30.

37. A computer program product or a computer program, comprising computer instructions, the computer instructions being stored in a computer-readable storage medium, wherein a sensing measurement device reads the computer instructions from the computer-readable storage medium and executes the computer instructions, to implement the sensing measurement method claimed in any one of claims 1 to 30.
